# EUROPEAN PATENT APPLICATION

(11) **EP 4 667 715 A2**
(43) Date of publication of application: **24.12.2025**
(21) Application number: 25200018.7
(22) Date of filing: 30.03.2023
(51) Int. Cl.: F01N 3/10

(54) **LAYERED AND PARTITIONED CATALYST ARTICLE**

(30) Priority: 30.03.2022 EP 22165357
(62) Divisional of application: 23717432.1
(71) Applicant: Dinex A/S, 5500 Middelfart (DK)
(72) Inventor: Väliheikki, Ari, 5500 Middelfart (DK); Maunula, Teuvo, 5500 Middelfart (DK); Wollf, Thomas, 5500 Middelfart (DK)
(74) Representative: Nex & Phister Law & IP Aps

(57) **Abstract**

The present disclosure relates to a zoned and partitioned catalyst article (1), in preferred embodiments comprising platinum group metal (PGM) elements, such as platinum (Pt) and palladium (Pd), and porous support materials such as aluminum oxide (Al2O3), silicon oxide (SiO2), titanium oxide (TiO2) and optionally comprising other metal oxides and promoters, which can be used for making a zoned catalyst article (1) for oxidizing carbon monoxide (CO), hydrocarbons (HCs), hydrogen (H2) and nitrogen oxide (NOx) emissions, the article further suitable for use as a temporary NOx and hydrocarbon storage for reduction of total NOx and hydrocarbon emissions. The disclosure describes the contents of the catalyst article (1) and how to utilize a such catalyst article (1) in purifying exhaust gas emissions.

## Description

### TECHNICAL FIELD

The present disclosure relates to a zoned and partitioned catalyst article (1), in preferred embodiments comprising platinum group metal (PGM) elements, such as platinum (Pt) and palladium (Pd), and porous support materials such as aluminum oxide (Al₂O₃), silicon oxide (SiO₂), titanium oxide (TiO₂) and optionally comprising other metal oxides and promoters, which can be used for making a zoned catalyst article (1) for oxidizing carbon monoxide (CO), hydrocarbons (HCs), hydrogen (H₂) and nitrogen oxide (NOₓ) emissions, the article further suitable for use as a temporary NOₓ and hydrocarbon storage for reduction of total NOₓ and hydrocarbon emissions. The disclosure describes the contents of the catalyst article (1) and how to utilize a such catalyst article (1) in purifying exhaust gas emissions.

### BACKGROUND

While diesel engines operate under lean conditions (A > 1), exhaust gases emitted from lean burn engines will comprise residual amounts of hydrocarbons (HCs), and carbon monoxide (CO). For controlling the emission harm, these compounds are typically oxidized in diesel oxidation catalysts (DOC) to less harmful exhaust compounds such as carbon dioxide (CO₂) and water (H₂O). Also, and besides these exhaust gas components, nitrogen oxides (NOₓ) and particulate matter (PM) are emitted from lean burn engines.

Due to demands for low carbon dioxide (CO₂) emissions (i.e., lower fuel consumption and temperatures) in light-duty and heavy-duty lean applications, and increasingly stricter emission limits for pollutants set by government authorities, there exists a continuous need for improved catalyst systems in the art.

Although NOₓ and particulate matter (PM) typically are removed by exhaust gas after-treatment units, e.g., NOₓ by urea by selective catalytic reduction (SCR) and particulate matter (PM) by diesel particulate filters (DPF); selective catalytic reduction (SCR) and particulate matter (PM) oxidation are boosted by nitrogen dioxide (NO₂), which again can be formed by nitric oxide (NO) oxidation on diesel oxidation catalysts (DOC).

In the art, it is known to apply lean NOₓ traps (LNT) with exhaust, which is lean in average, for storing NOₓ in long lean periods and reducing the exhaust periodically in short rich (λ < 1) periods, e.g., 2 - 5 second periods. Due to fuel economy and for obtaining compact systems without additional reductants, lean NOₓ traps (LNT) have provided more popular in light-duty diesel and gasoline applications than in heavy-duty diesel applications.

In the art, combinations of lean NOₓ traps (LNT) and selective catalytic reduction (SCR) units have also been introduced wherein e.g., an excess of ammonia (NH₃) formed during rich periods on lean NOₓ traps (LNT) is utilized in selective catalytic reduction (SCR) units downstream of the lean NOₓ traps (LNT).

In removal of total NOₓ emissions, passive NOₓ adsorbers (PNA) can storage NOₓ compounds present upstream of the selective catalytic reduction (SCR) catalyst temporarily and subsequently release the stored NOₓ compounds at temperatures, where selective catalytic reduction (SCR) reactions are favorable, e.g., above 200°C.

As the temperature of diesel exhaust gases typically is in the range of 100 - 500 °C, depending on driving conditions, high CO and hydrocarbon (HC) oxidation activity of a catalyst is needed for avoiding cold-start emissions due to insufficient catalyst warmup.

In general, carbon, which is present in particulate matter (PM), is passively regenerated in diesel particulate filters (DPF) continuously with NO₂ (C + NO₂, slow reaction) already at low temperatures (< 230°C) or actively (C + O₂, fast reaction) by periodical fuel (hydrocarbon) injection and throttling to increase the temperature up to carbon oxidation temperatures (about 600°C). Depending on the active diesel particulate filter (DPF) regeneration strategy chosen, high hydrocarbon concentrations of e.g., 0.5 - 2.0 volume-%, in exhaust gases increase the hydrocarbon light-off temperature (T₅₀) on DOC.

A high hydrocarbon concentration is known to inhibit CO, hydrocarbon, and NO oxidation and the hydrocarbon light-off temperatures are consequently increased significantly with up to about 50 - 100 °C in comparison to normal diesel exhaust gas conditions (@ < 500 ppm hydrocarbons). Accordingly, high NO to NO₂ oxidation activity at low temperatures (< 230°C) are needed for enabling a high performance in selective catalytic reduction (SCR). High CO, hydrocarbon, and NO oxidation activities are required to meet the current emissions limits and predefined engineering targets.

Currently, when a diesel engine is running close to maximum power, exhaust gas temperatures are typically above 400 - 500 °C. Especially during active catalyst regeneration, the temperature of the exhaust gas is high. Even under controlled diesel particulate filter (DPF) regeneration conditions, where temperatures commonly should not exceed 650°C, diesel oxidation catalysts (DOC) are still designed to withstand some uncontrolled particulate matter (PM) oxidation or diesel particulate filter (DPF) regeneration with peak temperatures up to 700 - 800 °C without an increased loss of activity. Nevertheless, it is necessary that at the highest temperatures, catalysts retain good long-term stability for maintaining high catalytic activity over the catalyst's lifetime.

In the art it is known that platinum (Pt) has good oxidation activity for CO, hydrocarbon, and NO. However, the thermal durability of Pt is considered average compared to other alternatives known in the art. To increase the thermal durability of Pt, palladium (Pd) is often added to diesel exhaust gas catalysts. Pd is also a commonly used component in diesel oxidation catalysts (DOC) due to its good activity and selectivity towards oxidation of hydrocarbons and CO.

Pt and Pd differ by the catalytic properties for different hydrocarbon types and their combination is normally considered necessary for exhaust gases having saturated/unsaturated and light/heavy hydrocarbons, including also oxygenated hydrocarbon. However, Pd is quite sensitive to deactivation in the presence of sulfur. Due to the high price of platinum group metals (PGMs), especially Pd, alternative materials for improving catalyst stability are desired.

The observation that Pt and Pd have different properties and activities in catalytic reactions under lean conditions lead early to the idea of having zoned catalytic materials in catalysts for combustion engines (US3947545, Toyota). Likewise, layered type catalysts are also well known in the art, c.f. e.g., GB1330842A wherein a catalyst is detailed comprising a metal oxide in a bottom layer and platinum group metals and metal oxides in a top layer.

The presence of sulfur compounds e.g., sulfur oxides (SOₓ), in exhaust gas streams is well known to affect the performance of after-treatment systems. Diesel oxidation catalysts (DOC) are commonly used as a first catalyst unit by flow direction in current after-treatment systems. Sulfur compounds can react with the catalyst surfaces of diesel oxidation catalysts (DOC), making the catalyst less efficient in the removal of harmful exhaust gas components, e.g., CO, hydrocarbon, and NOₓ. Also, sulfur comprising particulates can be trapped on diesel particulate filters. Commonly, though, at high temperature conditions, such as above 500°C, such accumulated sulfur compounds can be released from the catalysts.

Diesel exhaust gas can comprise other impurities such as phosphorus, zinc, or silicon originating e.g., from lubricants, oils, and/or fuel. Also, such impurities can decrease the performance of catalytic systems and thus, the presence of such impurities in after-treatment system units should be avoided. Contrary to sulfur, catalyst poisoning with other chemical elements and compounds is usually irreversible with the effect that the activity of the catalyst cannot be restored.

Apart from the effect of impurities present in exhaust gas streams, catalyst activity can also be decreased due to an exposure of the catalytic systems to high exhaust temperature conditions, e.g., above 800°C. The negative effects of high temperature conditions e.g., in the presence of water, can be partially avoided by utilizing suitably selected materials known in the art, and by improved preparation methods of catalyst manufacture. Also, minimizing exposure time at high temperature conditions reduces catalyst deactivation.

In the art, aluminum oxide (e.g., Al₂O₃), silicon oxide, (e.g., SiO₂), and/or their mixtures are well-known porous support materials used in catalysts for lean-operation applications. E.g., aluminum oxide is well-known as a porous support material for providing high surface areas for platinum group metal (PGM) components. Silicon oxide, when used together with aluminum oxide, increases thermal and chemical stability of catalysts.

The purpose of the porous support materials in the catalytic articles of the prior art and in the catalytic articles (1) of the present disclosure is to provide a solid matrix for carrying various reaction promoters and enable a high surface for permitting the desired contact of gas molecules undergoing the various catalytically improved reactions desired in the present technical field. In the technical field, and herein, such a solid matrix for carrying a reaction promoter is called a support, respectively a material capable of forming a support is called a support material. Terms which are used herein as well.

In the art, e.g., Si- (e.g., EP 0377290), Ti- (e.g., JP 4087627), Si-Ti- (e.g., US 5,145,825) and/or Zr- oxide supports are known for use in the provision of catalysts, which adsorb less sulfates and have been applied to catalysts for improving sulfur tolerance in diesel oxidation catalysts (DOC). The effect of various substituents as reaction promoters, such as Sc, Ti, Cr, Mn, Fe, Co, Cu, La, Au, Ag, Ga, In, Ce, V, Mo, W, Zr, Nb, Pr, as well as zeolites in different roles have also been proposed in the prior art (c.f. e.g., WO2004091782).

Different reaction promoters can be tailored for PGM components or by particle size. PGM components can be tailored e.g., for zeolites or ceria. When aluminum (Al) and cerium (Ce) oxides are used in SOₓ adsorption, it has been shown possible to decompose sulfur-comprising species in moderate temperatures. When e.g., lanthanum (La), barium (Ba), and yttrium (Y) components are used, more stable sulfates are generated by catalysis, c.f. e.g., WO1993022050A1. Likewise, zeolites have been applied with aluminum and cerium oxides on Pt-DOCs since the 1990s, c.f. e.g., WO 9401926. In the art, tungsten (W) has been also used in emission catalysts in selective catalytic reduction (SCR) (V-W/TiO₂) and TWC, c.f. e.g., EP0056729.

Further, many different types of reaction promoters and PGM loadings/ratios have been proposed in the art for DOC, particularly as single compositions. However, many additives are reaction promoters for a certain property but have no or even negative effect on other properties. For example, an optimal composition for hydrocarbon light-off may be quite poor in NO oxidation, and likewise, best catalysts for NO oxidation may have limitations in hydrocarbon and CO oxidation. In addition, local PGM distribution/dispersion and mass/heat transfer has an important role in catalyst reaction chains and durability.

Considering the abovementioned complexities in catalyst design and due to stringent emission legislation, there is a need for developing oxidation and lean catalysts and after-treatment systems (ATS) with improved performance and high cost-efficiency. To make that possible, the utilization of PGM components and relevant support material components is becoming more crucial to guarantee a good performance and long-term durability.

The catalyst article (1) of the disclosure carries out catalytic reactions comprised in catalytic aftertreatment systems (ATS) to purify and oxidize exhaust gas emissions from engine lean combustion operation conditions. The catalyst article (1) of the disclosure is used for the oxidation and removal of carbon monoxide (CO), hydrocarbons (HCs), hydrogen (H₂) and nitric oxide (NO) oxidation to nitrogen dioxide (NO₂) as well as enhancing nitrogen oxides (NOₓ) removal efficiency in such after-treatment systems.

The catalyst article (1) of the disclosure can also include NOₓ adsorption properties to store NOₓ emissions temporary in a designated location of the catalyst article (1) to enable decreases in total NOₓ emissions measured after passage of the ATS. These catalytic functions, which in accordance with the disclosure are carried out by multiple layers and zones, can be applied in the same catalyst article (1).

### DEFINITIONS AND ABBREVIATIONS

λ lambda, Air-fuel equivalence ratio
γ (gamma)
ASC - Ammonia slip catalyst
ATS - After-treatment system
BET - Brunauer-Emmett-Teller, method for specific surface area calculation.
CeOₓ - Cerium oxide (s)
cpsi - Cells per square inch
deNOₓ - Removal of nitrogen oxides
DOC - Diesel oxidation catalyst
DPF - Diesel particulate filter
total efficient active metal per volume: g/L unit for PGM, component or coating loading, grams of PGMs, components or coating per total substrate volume in liters. Volumetric PGM loading is meaningful for understanding the total PGM added (total efficient active metal per volume), without knowing exactly substrate geometric area, coating density.
HC - Hydrocarbon(s)
HT - Hydrothermal
HT700 - Hydrothermal (aging) at 700°C
In-B - Inlet bottom, inlet proximal
In-T - Inlet Top, inlet distal
LaOₓ - Lanthanum oxide(s)
LNT - Lean NOₓ traps
NOₓ - Nitrogen oxide(s)
Out-B - Outlet bottom, outlet proximal
Out-T - Outlet Top, outlet distal
PNA - Passive NOₓ adsorber
PGM - Platinum group metal
SAR - Si/Al₂ ratio, molar
SCR - Selective catalytic reduction
SGB - Synthetic gas bench
SOₓ - Sulfur oxide(s)
SV - Space velocity
T₅₀ Light-off temperature, temperature when 50% conversion is achieved
TWC - Three-way catalyst
WHTC - World Harmonized Transient Cycle
WOₓ - Tungsten oxide (s)
ZrOₓ - Zirconium oxide (s)

### SUMMARY OF THE INVENTION

### DESCRIPTION OF THE DRAWINGS

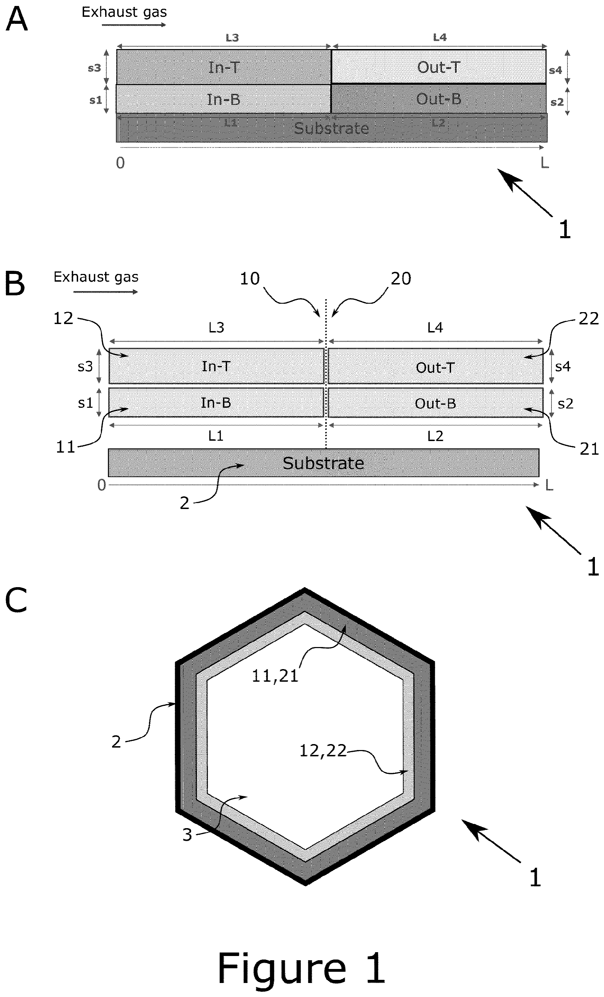

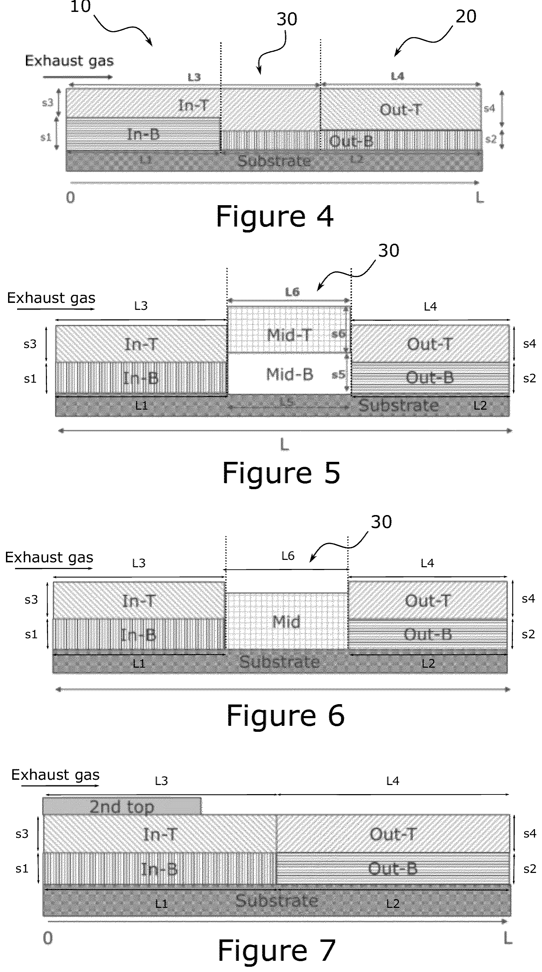

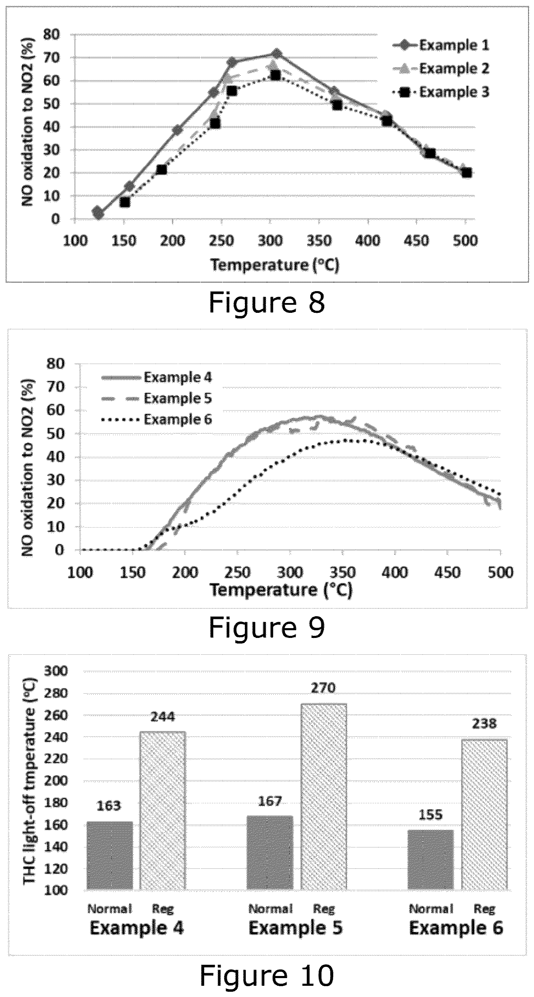

Figures 1 to 7 are illustrations of exemplary embodiments of the catalyst article (1) of the present disclosure and of the prior art. Figures 8 to 17 show experimental documentation for the technical benefits of the present disclosure.
Figure 1 shows a catalyst article (1) of the present disclosure comprising an inlet bottom (In-B) coating layer, outlet bottom (Out-B) coating layer, inlet top (In-T) coating layer, and outlet top (Out-T) coating layer which are adjacent and in top of each other.
Figure TRB shows a catalyst article (1) of the present disclosure comprising an inlet bottom (In-B) coating layer, outlet bottom (Out-B) coating layer, inlet top (In-T) coating layer, and outlet top (Out-T) coating layer, which are adjacent and in top of each other and coating lengths and thicknesses are varied. As detailed in the figure, the overlapping top and bottom layers form a middle partition in accordance with Figure 5. In the example of Figure TRB, In-T is overlapping Out-B, thereby forming the middle partition, but the reverse is equally possible, Out-T overlapping In-B, but not shown herein.

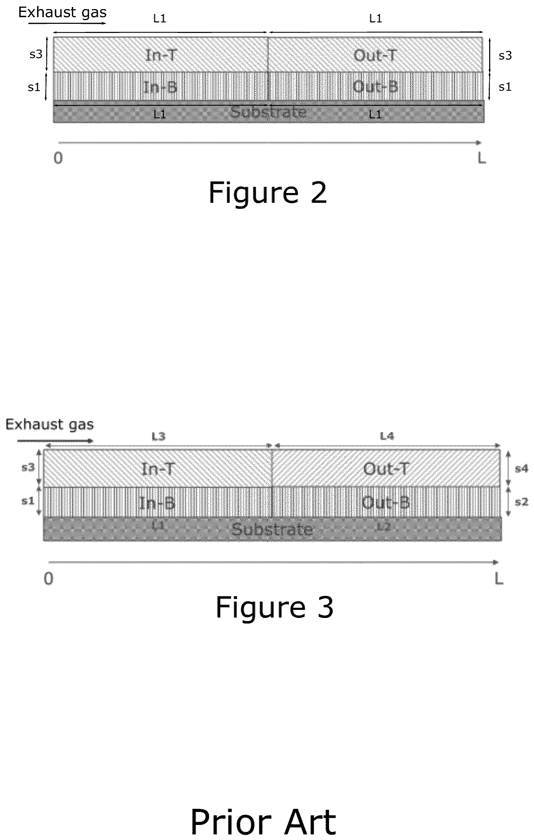

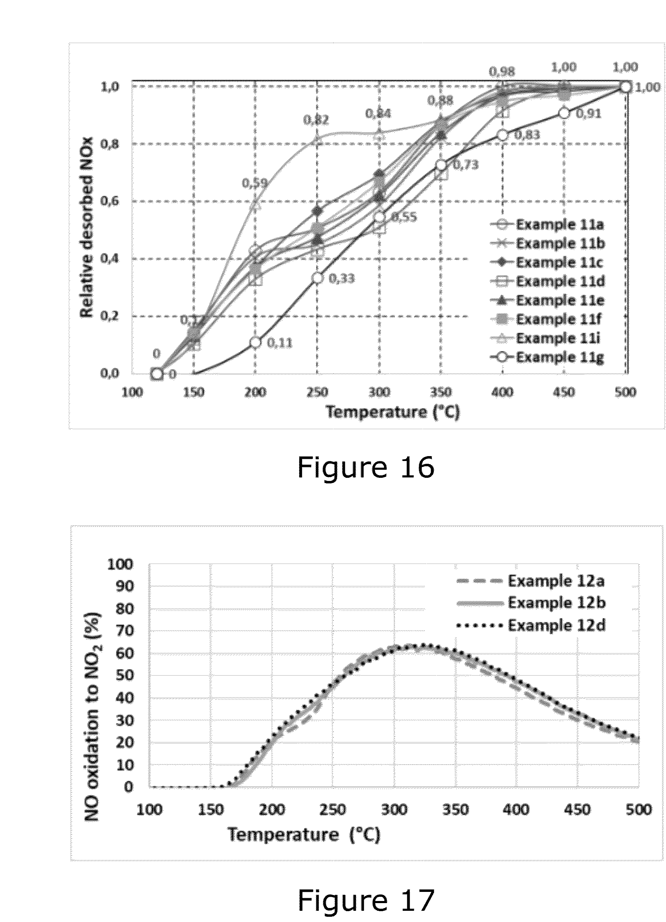

Figure 3 shows a catalyst article (1) of the prior art comprising an inlet bottom (In-B) coating layer, outlet bottom (Out-B) coating layer which is same as In-B coating layer, inlet top (In-T) coating layer, and outlet top (Out-T) coating layer, which are adjacent and in top of each other. In the art, such catalyst article (1)s are manufactured by firstly coating the bottom layer (in the parlance of the figures, coating both In-B and Out-B simultaneously), and subsequently, adding the two different top coatings, In-T and Out-T. In the present disclosure, samples prepared having a coating structure in accordance with Figure 3 are exemplary teachings for use in accordance with the teachings of the present disclosure as detailed in Example 12 and Figure 17.
Figure 2 shows a catalyst article (1) of the prior art comprising an inlet bottom (In-B) coating layer, outlet bottom (Out-B) coating layer which is same as In-B coating layer, inlet top (In-T) coating layer, and outlet top (Out-T) coating layer which is same as In-T coating layer, which are in top of each other.
   The present disclosure concerns catalyst article (1)s carrying at least two partitions which are characterized in that the at least two partitions comprise at least two chemically distinct layers (In-B,In-T or Out-B,Out-T) and that at least an inlet bottom layer is chemically or morphologically distinct from an outlet bottom layer and that an inlet bottom layer is chemically or morphologically distinct from an outlet bottom layer.
Figure 5 shows a catalyst article (1) of the present disclosure comprising three partitions, an inlet partition, a middle partition, and an outlet partition created by an inlet bottom (In-B) coating layer, middle bottom (Mid-B) coating layer, outlet bottom (Out-B) coating layer, inlet top (In-T) coating layer, middle top (Mid-T) coating layer, and outlet top (Out-T) coating layer, which are adjacent and in top of each other.
Figure 6 shows a catalyst article (1) of the present disclosure comprising three partitions, an inlet partition, a middle partition, and an outlet partition created by an inlet bottom (In-B) coating layer outlet bottom (Out-B) coating layer, middle (Mid) coating layer, inlet top (In-T) coating layer, and outlet top (Out-T) coating layer, which are adjacent and in top of each other.
Figure 7 shows a catalyst article (1) of the present disclosure comprising an inlet bottom (In-B) coating layer, outlet bottom (Out-B) coating layer, inlet top (In-T) coating layer, outlet top (Out-T) coating layer and second top (2^{nd} top) coating layer, which are adjacent and in top of each other.
Figure 8 shows the NO oxidation to NO₂ (%) difference measured after W+Pt comprising layered catalyst article (1) (example 1), W+Pt comprising single layer coating composition (example 2) and single layer REF (example 3) in diesel engine steady-state experiments.
Figure 9 shows the NO oxidation to NO₂ (%) difference measured after HT700 aged Pt+Pd+W comprising zoned/layered sample (Example 4) and Pt+ W comprising layered sample (Example 5) and Pt+Pd comprising layered sample (Example 6) in SGB tests.
Figure 10 shows the CO and THC light-off temperature (°C, T₅₀) difference measured in normal and regeneration conditions after HT700 aged Pt+Pd+W comprising zoned/layered sample (Example 4) and Pt+W comprising layered sample (Example 5) and Pt+Pd comprising layered sample (Example 6) in SGB tests.
Figure 11 shows the NO oxidation to NO₂ (%) difference measured after HT700 aged Pt+Pd+W containing zoned/layered sample (Example 7) and Pt+Pd containing zoned/layered sample (Example 8) in SGB tests.
Figure 12 shows NO oxidation to NO₂ (%) difference measured after HT700+SO₂ aged Pt+Pd+W containing zoned/layered sample (Example 7) and Pt+Pd containing zoned/layered sample (Example 8) in SGB tests.
Figure 13 shows the THC light-off temperature (°C, T50) difference measured in normal conditions over HT700 and HT700+SO₂ aged Pt+Pd+W containing zoned/layered sample (Example 7) and Pt+Pd containing zoned/layered sample (Example 8) in SGB tests.
Figure 14 shows the NO oxidation to NO₂ (%) difference measured after HT700 aged Pt+Pd+W containing zoned/layered sample (Example 9) and Pt+Pd containing zoned/layered sample (Example 10) in SGB tests.
Figure 15 shows the CO and THC light-off temperature (°C, T₅₀) difference measured in normal conditions over HT700 aged Pt+Pd+W containing zoned/layered sample (Example 9) and Pt+Pd containing zoned/layered sample (Example 10) in SGB tests.
Figure 16 shows the relative desorbed NOₓ (%) from fresh layered samples (Examples 11a-g) as a function of temperature.
Figure 17 shows the NO oxidation to NO₂ (%) difference measured on a partitioned catalyst article (1) in SGB tests.

It is to be understood, that the embodiments shown in the figures are for illustration of the present invention and cannot be construed as being limiting on the present invention. Unless otherwise indicated, the drawings are intended to be read (e.g., cross-hatching, arrangement of parts, proportion, degree, etc.) together with the specification, and are to be considered a portion of the entire written description of this disclosure.

### DETAILED DESCRIPTION

As detailed herein above, layered catalyst articles are commonly employed in the art. In such layered catalyst articles typically two layers having different chemistry are employed with the aim of promoting one or more conversion reactions across the length of the catalytic article.

In layered catalyst articles, one layer will be in contact with the surface of the underlying substrate (2) and form a proximal coating layer on the underlying substrate, with further and more distal layers being formed consecutively on top of a respective underlying coating layer, which consequently is more proximal to the underlying substrate. This principle is illustrated in Figures 2 and 3 and shown partially in Figure 1C when viewed along the direction of the gas flow through the catalytic article.

For maintaining gas flow through the catalytic article (1), there is a limit to the extent to which the gas passage across the catalytic article can be reduced by the addition of further catalytic coating layers before the pressure drop across the catalytic article becomes a limiting factor for the correct operation of the vehicle, wherein the catalytic article is installed.

At the same time, the possible volume in an engine assembly that can be allocated to catalytic articles for exhaust gas conversion is limited by the design constraints of the engine assembly, wherefore catalytic performance cannot simply be improved by changing the dimensions of the catalytic articles known in the prior art.

Accordingly, optimization of the catalytic conversion across catalytic articles is of paramount importance.

The present disclosure relates in a first aspect and embodiment to a layered (or zoned) and partitioned catalyst article (1), wherein by appropriate selection of the catalytically active components in the catalytic layers a catalyst article (1) having at least two catalytic partitions (10,20,30) is created, each catalytic partition selective for a catalytic conversion of one or more chemical exhaust components contained in an exhaust gas from a fueled combustion or explosion engine into one or more desirable release components.

Surprisingly, the present inventors have discovered that by selectively partitioning catalytic articles for exhaust gas conversion into smaller catalytically active partitions, wherein a given partition is catalytically active for different exhaust gas components compared with the remaining catalytically active partitions, overall improvement to the exhaust gas conversion can be achieved at the cost, if any, of only minor declines in the exhaust quality of individual undesired gas components of the exhaust gas.

In the present disclosure, the principle of the present invention is discussed in light of a catalyst article (1) comprising two catalytic partitions (10,20), wherein the first catalytic partition (10) is selective for the conversion of hydrocarbons (HC's), H₂, or carbon monoxide (CO) from exhaust gas into water and carbon dioxide, and the second catalytic partition (20) is selective for the conversion of nitrogen monoxide into nitrogen dioxide, and/or for the conversion of sulfur monoxide into sulfur dioxide.

By selectively removing hydrocarbons, hydrogen and/or carbon monoxide to below a critical level for contamination of the second partition, operation of the NOx/SOx-oxidation catalyst can be maintained operative and the total catalyst volume across the catalyst article of the invention is thereby optimized.

Accordingly, there is herein detailed in a first aspect and embodiment a catalyst article (1) for exhaust gas purification in lean exhaust gas conditions comprising a passage (3) for permitting an exhaust gas to traverse the catalyst article (1), thereby defining an inlet and an outlet from the passage for the exhaust gas and a flow direction of passage for the exhaust gas traversing the catalyst article (1), the passage (3) presenting a substrate (2) surface for carrying one or more catalytically active layers (11,12,21,22) for converting at least a respective first and a respective second undesired chemical component contained in the exhaust gas into at least a corresponding first or a corresponding second desired chemical component during passage of the catalyst article (1) by the exhaust gas;
- where on the substrate (2) are arranged at least a first and a second catalytic partition (10,20), each respective catalytic partition (10,20) comprising at least a respective first and a respective second catalytic layer (11,12), (21,22) arranged such that the first respective catalytic layer (11,21) is proximal to the substrate (2) and the second respective catalytic layer (12,22) is distal from the substrate (2);
- where each of the first and second catalytic layers (11,12,21,22) are pairwise chemically distinct;
- where the first catalytic partition (10) is arranged in the passage (3) such that the exhaust gas while traversing the passage (3) first encounters the first catalytic partition (10) prior to encountering the second catalytic partition (20); and
- where the second catalytic partition (20) promotes a catalytic conversion of one of either the respective first or second undesired chemical components into the corresponding first or second desired chemical component and the first catalytic partition (10) substantially does not.

The general construction of a catalyst article (1) in accordance with the present invention is detailed in Figure 1. The catalyst article (1) of the disclosure presents a substrate (2) surface, where at the inlet and at the outlet, defined by flow direction, the two partitions (10,20) respectively start at the inlet (first partition) and end at the outlet (second partition), creating the desired coating composition, , present on the substrate (2) surface. While the partitions may start and end at positions which differ from the inlet and the outlet, for spatial optimization of the catalyst article (1), in practice they never will.

For simplification of the present text, the first proximal coating (11) is labelled and discussed as In-B, the first distal coating (12) is labelled and discussed as In-T, the second proximal coating (21) is labelled and discussed as Out-B, and the second distal coating (22) is labelled and discussed as Out-T. Consequently, Inlet and outlet distal (top) coating layers adheres to inlet and outlet proximal (bottom) coating layers. Accordingly, Bottom and Top coating layers as described herein are defined in respect of the substrate (2) surface, not by gravimetry, by bottom being most proximal to the substrate (2) surface and top being most distal to the substrate (2) surface.

A substrate (2) typically forms a honeycomb structure and flow channels to keep a pressure drop low and to have high geometric surface for thin catalytic coating layers. The substrate (2) surface is located on the substrate's (2) walls and pores forming its inside flow channels, in the parlance of the claims, the passage (3).

As discussed above and as shown in Figures 2 and 3, in the art it is known to create zoned catalyst articles. The catalyst article shown in Figure 2 is a common two-layered catalyst article, where top and bottom coatings are identical across the entire length of the catalyst article and therefore does not present a zoned catalyst.

The catalyst article of Figure 3, on the contrary, has a first and a second catalytic zone as the two top catalytic layers are chemically different. However, in the art, the bottom layer (in the parlance of the claims, the proximal layer) remains uniform. Generally, this construction does not permit the catalyst article to perform more than one catalytic action across the catalytic article, but does allow for improvements to the catalytic conversion by e.g., increasing the content of a catalytic promoters such as otherwise expensive platinum or palladium in the second top-layer arranged towards the exit from the catalytic article, which can be kept at a lower level in the first zone, since the content of the catalytic reactant is higher at the entrance of the exhaust gas into the catalytic article.

The present catalytic article (1) dispenses with this principle by having all four catalytic layers being chemically different from each other. Thereby a true catalytic partition into at least two different catalytic partitions can be achieved such that the first catalytic partition (10) can promote a first catalytic conversion and the second catalytic partition (20) can promote a different catalytic conversion substantially not promoted by the first catalytic partition (10).

In the context of the present application, it is considered that a catalytic partition does not *substantially* promote a catalytic reaction if not more that 20% by content, preferably not more than 15% by content, or preferably not more than 10% by content, of a specific chemical component is converted as a side reaction in a catalytic partition otherwise arranged for converting a different chemical component.

In the preferred embodiments of the present invention, wherein the first catalytic partition (10) is arranged for converting hydrocarbons, H₂, and CO into water and CO₂, and the second catalytic partition (20) is arranged for converting NOx and/or SOx into NO₂ and/or SO₃, the conversion of NOx and/or SOx into NO₂ and/or SO₃, takes place in the second catalytic partition (20) substantially only in the second catalytic partition (20) with influencing conversion (c.f. the experiments) in the first catalytic partition (10).

The produced partitioning therefore successfully has achieved separation of the two catalytic processes.

In the preferred embodiment, the first catalytic partition (10) achieves sufficient completion of the HC, H₂, and CO conversion such that the NOx/SOx-conversion in the second catalytic partition (20) can take place without catalytic poisoning. However, as shown in the experiments, the second catalytic partitioning (20) as formulated succeeds in a secondary conversion also of at least some unreacted HC, H₂, and CO remaining in the exhaust gas, which is beneficial. Accordingly in the present invention, there is no strong restriction on the catalytic effects of the second catalytic partition (20) with respect to the first catalytic partition (10), but there is with respect to the first catalytic partition (10) for ensuring that the second catalytic partition (20) can be employed with maximum efficiency.

In the Figures are further indicated various lengths, indicating length of the catalytic article (1) and thicknesses of the various catalytic layers (11,12,21,22). As detailed herein below, in some embodiments, variation of the layer size (effectively the layer volume) forms part of the modifications of the catalytic layers for obtaining the full effect of the catalytic partitioning of the present invention.

In some embodiments of the catalytic article (1) in accordance with the present disclosure there is at least a third partition (30) arranged in the passage (3) after the first catalytic partition (10) and before the second catalytic partition (20) in the flow direction of the exhaust gas through the passage (3), as detailed in Figures 4 to 6.

In Figure 4 is detailed an embodiment, wherein the third partition (30) is created by overlap of the first distal catalytic layer (12) overlapping the second proximal catalytic layer (21), i.e., the In-T layer and the Out-B layers. The effect of this overlap in general is to avoid diffusion short cuts by incompletely connected coating layers, and in the preferred embodiment of the present invention, the overlap further permits reactant storage in the second proximal catalytic layer (21) for improved catalytic conversion in the second catalytic partition (20), while not yet terminating the HC, H2, and/or CO-conversion taking place in the first distal catalytic layer (12).

The embodiment detailed in Figure 4 is particularly preferred in terms of ease of manufacturing and for catalytic conversion, as discussed above, however, and obviously, the third partition (30) can also be created by having the second distal catalytic layer (22) overlap the first proximal catalytic layer (11) if this is relevant.

In Figures 5 and 6 are further embodiments of the third partition (30) shown, which in some situations may be useful in the catalytic article (1) of the present invention.

In Figure 5 is detailed an embodiment, wherein the third partition (30) is intended to be a third catalytic partition (30), having a third proximal and a third distal catalytic layer having chemistries and reactive volumes adapted for performing a third catalytic conversion not performed by either of the first (10) or second (20) catalytic partitions.

In Figure 6 is detailed an embodiment, wherein the third partition (30) is a single layer, connecting the aforementioned first and second catalytic partitions (10,20). In some embodiments, e.g., for manufacturing purposes it can be beneficial to have a neutral zone between the two catalytic partitions, which is reflected in the shown embodiment.

As detailed above, in the most preferred embodiment of the present catalyst article (1) the first catalytic partition (10) is selective for the conversion of hydrocarbons, H₂, and/or carbon monoxide (CO) from exhaust gas into water and carbon dioxide, and the second catalytic partition (20) is selective for the conversion of nitrogen monoxide into nitrogen dioxide, and/or for the conversion of sulfur dioxide into sulfur trioxide.

In accordance with the most preferred embodiment, in an embodiment the first catalytic partition (10) comprises in the first proximal catalytic layer (11) one or more catalytically active metals selected from platinum-group metals (PGM) comprising Pt, Pd, Rh, Ir, Ru, Os, at a loading of less than 0.8 g/L; and in the first distal catalytic layer (12) comprises one or more catalytically active metals selected from platinum-group metals (PGM) comprising Pt, Pd, Rh, Ir, Ru, Os, at a loading of between 0.5 - 7.0 g/L, with the proviso that the metal loading in the first distal catalytic layer (12) shall be higher than in the first proximal catalytic layer (11).

In accordance with the most preferred embodiment, in an embodiment the platinum-group metal selected for the first proximal (11) and distal (12) catalytic layers are platinum and/or palladium.

In accordance with the most preferred embodiment, in an embodiment platinum and palladium are present in the first distal catalytic layer (12) at a Pt:Pd ratio in the range from 1:4 to 5:1 and in the first proximal catalytic layer (11) at a Pt:Pd ratio in the range from 1:9 to 9:1.

In accordance with the most preferred embodiment, in an embodiment the second catalytic partition (20) in the second proximal catalytic layer (21) comprises one or more catalytically active metals selected from platinum-group metals (PGM) comprising Pt, Pd, Rh, Ir, Ru, Os, at a metal loading of less than 0.8 g/L, and in the second distal catalytic layer (22) comprises one or more catalytically active metals selected from platinum-group metals (PGM) comprising Pt, Pd, Rh, Ir, Ru, Os, at a metal loading of between 0.1 - 2.0 g/L, with the proviso that metal loading in the second distal catalytic layer (22) shall be higher than in the second proximal catalytic layer (21), and wherein the second distal catalytic layer (22) further comprises tungsten (W) and/or molybdenum (Mo) in an amount sufficient for promoting conversion of NOx to nitrogen dioxide.

In accordance with the most preferred embodiment, in an embodiment the platinum-group metal selected for the second proximal (21) and distal (22) catalytic layers are platinum and/or palladium.

In accordance with the most preferred embodiment, in an embodiment the Pt:Pd ratio in the second distal catalytic layer (22) is in the range from 1:0 to 30:1 and in the second proximal catalytic layer (21) the range from 1:9 to 9:1.

In accordance with the most preferred embodiment, in an embodiment tungsten (W) is present as tungsten oxide (WO₃) is in the range from 1 to 30 g/L in the second distal catalytic layer (22).

In accordance with the most preferred embodiment, in an embodiment the PGM loading in the catalytic coating layers follow the order: In-T ≥ Out-T > In-B > Out-B, but preferably In-T > Out-T > In-B > Out-B.

In accordance with the most preferred embodiment, in an embodiment the first (11) and second (21) proximal catalytic layers further comprise cerium (Ce) oxides or cerium mixed oxides selected from ZrCe, MnCe, TiCe, PrCe oxides, or their combinations, in amounts sufficient for promoting NOₓ adsorption-desorption and NO₂ formation by desorption below 200°C.

In accordance with the most preferred embodiment, in an embodiment cerium in the form of a cerium oxide or a cerium mixed oxide is present in an amount of from 0.05 g/L to 0.5 g/L based on total cerium oxide or cerium mixed oxide weight.

In accordance with the most preferred embodiment, in an embodiment the first (11) and second (21) proximal catalytic layers further comprise lanthanum (La), yttrium (Y), hafnium (Hf), or a combination thereof, but preferably lanthanum, in an amount in the range from 1 to 10 g/L as stable oxides, preferably from 3 to 6 g/L for promoting the NOₓ and SOₓ adsorption capacity of the first and second proximal catalytic layers.

In accordance with the most preferred embodiment, in an embodiment the first (11) and second (21) proximal catalytic layers further comprise one or more zeolites having a high Si/Al₂ ratio (SAR) selected from Beta, ZSM-5, chabazite (CHA), AEI, ferrierite (Fer), Y or their combinations in an amount from 5 - 1000 g/L, but preferably 10 - 50 g/L for increasing hydrocarbon and/or NOₓ adsorption capacity.

In accordance with the most preferred embodiment, in an embodiment the catalytic layers (11,12,21,22) further to the catalytic promoters comprise a porous support selected from porous metal oxides comprising aluminum oxide, alumina (Al₂O₃), silicon oxide (SiOₓ), silica (SiO₂), titanium oxide (TiOₓ), titania (TiO₂), or mixtures thereof.

In accordance with the most preferred embodiment, in an embodiment the amount of coating in each coating layer is from 10 to 200 g/L, preferably from 40 to 100 g/L, and more preferably from 50 to 80 g/L in all layers of the catalyst article (1), and wherein the porous metal oxide form the balance for the coating composition.

In embodiments the coating layers comprise porous Al, Si and/or Ti oxide as support for active compounds and promoters for diffusive exchange with an exhaust gas traversing for contacting exhaust gas with catalytic coating layers.

In the present invention the coating layers have their specific roles in enabling high performance of the catalyst article (1) of the disclosure. In embodiments, the high performance is based on a composition of each layer and zone with varying platinum group metal (PGM) loading, Pt:Pd ratio, support composition and added promoters in the flow direction.

In the preferred embodiments, the location of active compounds (PGMs) and promoters radially (bottom i.e., proximal; top i.e., distal) and axially (inlet, middle, outlet) in different coating layers has a key effect on the functionality and durability to avoid deactivation. In the preferred embodiment of the present invention, the front (inlet) part of the catalyst article (1) of the disclosure is mainly responsible of reaction initiations and oxidation of hydrocarbons, H₂ and CO.

During diesel particulate filter (DPF) regeneration, hydrocarbon compounds which have lowest light-off temperature, e.g., unsaturated hydrocarbons with moderate carbon chain length or aromatic hydrocarbons, are oxidized fast at the front part.

Also, during DPF regeneration, hydrocarbon compounds, which have highest light-off temperature e.g., saturated hydrocarbons with notably short or long carbon chain length, require a longer residence time, higher reaction temperature and a Pt-rich PGM composition and are thus oxidized at the rear (outlet) part of the catalyst article (1).

In consequent thereof, in the preferred embodiment of the present invention, the whole axial and radial length of the catalyst article (1) of the disclosure is utilized in oxidation of the different types of hydrocarbon compounds at low temperatures.

In the preferred embodiment of the present invention, the rear part of the catalyst article (1) of the disclosure is also especially responsible of NO oxidation to NO₂, which improves soot oxidation in particulate filter (e.g., in DPF) and NOₓ reduction in selective catalytic reduction by ammonia or urea (NH₃- or urea-SCR) or lean NOₓ trap (LNT) units.

In embodiments, a catalyst article (1) of the present disclosure can also include properties for a promotion of NOₓ removal efficiency in the complete ATS by utilizing NOₓ adsorption and storage functionality as a tailored structure. NOₓ storage functions can be applied in same or preferably in the different layer, where oxidation reactions take place.

Oxidation and adsorption functions can also be divided in two different catalyst articles (1) of the disclosure with specific cell densities on substrates (2).

Specific metal oxide or zeolite compounds can be used as promoters to improve the performance of the catalyst article (1) of the disclosure. These compounds are added into particular locations in the catalyst article (1) of the disclosure to optimize their promotion.

In preferred embodiments, tungsten (W) in the form of tungsten oxides, such as tungsten trioxide (WO₃), can be utilized in stabilizing Pt and improving the activity of the catalyst article (1) of the disclosure in NO oxidation to NO₂. Tungsten (W) is a relatively cheap material compared to PGM components such as Pt and Pd and thus, a good substitute for them.

In preferred embodiments, silicon (Si) and/or zirconium (Zr) compounds in the form oxides, such as silica (SiO₂) and zirconia (ZrO₂), can be utilized to avoid the adsorption of sulfur oxides (SOₓ) on the catalyst article (1) of the disclosure, and thus, improve the activity and stability over the lifetime of the catalyst article (1) of the disclosure.

In preferred embodiments, lanthanum (La), hafnium (Hf), yttrium (Y), and/or cerium (Ce) compounds in a form of oxides, such as lanthana (La₂O₃), yttria (Y₂O₅), and/or ceria (e.g., CeO₂), can be utilized to improve adsorption of nitrogen oxides (NOₓ) on the catalyst article (1) of the disclosure, and thus, to decrease overall NOₓ emissions of ATS.

In preferred embodiments, zeolites are used as hydrocarbon or NOₓ trapping agents on the tailored layers of the catalyst article (1) to decrease hydrocarbon and NOₓ emissions during engine cold start.

The catalyst article (1) of the present disclosure in the preferred embodiment wherein a first catalytic partition (10) is selective for the conversion of hydrocarbons (HC's), H2, or carbon monoxide (CO) from exhaust gas into water and carbon dioxide comprises at least two coating layers which have specific function in removal of the exhaust gas components.

In the preferred embodiment, all or most of the platinum group metal (PGM) components, such as platinum (Pt), palladium (Pd), rhodium (Rh), iridium (Ir), ruthenium (Ru), osmium (Os), and/or noble metals such as silver (Ag) and gold (Au), but preferably PGM components, and more preferably Pt and Pd, in metal or in oxide form are in the top layer in accordance with the main aspects and embodiments of the present invention. The bottom coating layers on the contrary have a lower amount of PGMs, or it is free of PGM components, compared to the top layers, in accordance with the main aspects and embodiments.

The PGM loading (g/L, grams of PGMs per substrate volume as liters), and Pt:Pd ratio (mass ratio of Pt and Pd) is varied over the length of the catalyst article (1). The amount of PGM components in the front (inlet) part of the catalyst article (1) can be the same or higher as the amount of PGM components on the rear (outlet) part of the catalyst article (1). Contrary to this, the Pt:Pd ratio on the outlet part of the catalyst article (1) is the same or higher as the Pt:Pd ratio on the inlet part of the catalyst article (1).

The PGM loading in the catalyst article (1) is defined primarily as volumetric values (grams of PGM per substrate volume as liters, g/L). It is possible to define PGM loading for the complete front and rear part of the catalyst article (1) as grams of PGM per volume of front (or rear) part of the substrate, but this is less useful.

The front part of the catalyst article (1) comprises at least two different coating layers, inlet-bottom (In-B) and inlet-top (In-T)and the rear part of the catalyst article (1) at least comprises two different coating layers, outlet-bottom (Out-B) and outlet-top (Out-T as shown in e.g., Figure 1.

It is possible to define a PGM loading separately for top (distal) and bottom (proximal) layer in each location too. In the In-T coating layer of the catalyst article (1) (c.f. Figures 1-7), PGM loading is in the range of about 0.5 - 7.0 g/L, preferably 0.5 - 3.0 g/L and more preferably 0.8 - 1.5 g/L, while the Pt:Pd ratio in the In-T coating layer of the catalyst article (1) is in the range of about 1:4 - 5:1, preferably 1:1 - 4:1, but more preferably 2:1 - 3:1.

It is important to have both Pt and Pd in the In-T coating layer to have a low light-off temperature (T₅₀, temperature when 50% conversion is achieved) for hydrocarbon and CO as well as to reach a good stability towards thermal and hydrothermal aging. Pt and Pd are stabilizing each other by a close interaction and a bimetallic Pt+Pd catalyst is better than single PGM catalysts.

In the Out-T coating layer of the catalyst article (1), the PGM loading is in the range of about 0.1 - 2.0 g/L, preferably 0.3 - 1.5 g/L and more preferably 0.5 - 1.2 g/L, while the Pt:Pd ratio in Out-T coating layer of the catalyst article (1) is in the range of about 3:1 - 30:1, preferably 4:1 - 15:1 and more preferably 5:1 - 10:1. In some embodiments, palladium is even absent.

The high Pt loading in the rear part ensures a high activity and durability in NO oxidation to NO₂ reaction. Optionally, the rear part of the catalyst article (1) can also be free of Pd. In the Out-T coating layer, the PGM loading is about same or preferably lower and the Pt:Pd ratio about the same or preferably higher than in In-T coating layer.

Underneath the PGM comprising top layers, the catalyst article (1) comprises at least In-B and Out-B coating layers, which can fill the corners of square-shape channels. The filling of the corners creates more round-shape flow channels, which have relatively a lower pressure drop than square-shape channels with the same hydraulic diameter.

If the bottom layer comprises at least one PGM, exhaust gas components such as hydrocarbons, CO and NOₓ diffusing through the top layer will reach active sites in bottom layer. Mass transfer is faster when most of the PGMs is used in top coating layers and exhaust gas components have faster contact on active sites (on PGM). Thus, all or most of PGMs is located in top layers.

In a 4-layer structure of the present disclosure, the PGM loading in coating layers follow the order: In-T ≥ Out-T > In-B ≥ Out-B, preferably In-T > Out-T > In-B ≥ Out-B. While the total loading with Pt and Pd in some of the layers may be equal, the Pt:Pd ratios will be varied instead to maintain chemical difference between the four layers (In-T,In-B,Out-T,Out-B) as mandated by the preferred embodiments of the present invention.

The composition of the support, where PGM and promoters are added, can be varied by layers, consisting of porous metal oxides such as aluminum oxide e.g., alumina (Al₂O₃), silicon oxide (SiOₓ) e.g., silica (SiO₂), titanium oxide (TiOₓ) e.g., titania (TiO₂) or their mixtures and compounds. Possible promoters have been defined separately for each layer. In the main examples, the main support material was alumina, which is preferably a γ (gamma) form with a high surface area promoting active metal and promoter distribution.

Silica and titania can be added in tailored ways in different layers to stabilize PGMs and alumina as well as promote certain reactions. If present, preferably, TiO₂ and SiO₂ are present on top layers (e.g., In-T and Out-T). TiOₓ and SiOₓ stabilizes aluminum oxides improving sulfur durability and promoting oxidation reactions on the PGMs. In addition, if TiOₓ is present preferably in inlet layers and SiOₓ in outlet layers, Ti oxides can decrease sulfur accumulation and increase sulfur recovery, which enables a better sulfur regeneration of the catalyst article (1) in use under regeneration (DPF, desulfation) conditions. Si oxides is preferably present in outlet layers, because together with alumina, Si oxides can have a promoting effect on NO₂ formation on Pt-rich compositions.

The coating amount of each coating layer is in the range of about 10 - 200 g/L, preferably about 40 - 100 g/L and more preferably about 50 - 80 g/L in all layers of the catalyst article (1). Respectively, the total coating amount in the front and rear parts is defined by the coating amount in In-B + In-T and Out-B + Out-T in four coating layers.

Besides alumina and PGM components, any coating layer of the disclosure can also optionally comprise other components such as tungsten oxides (WOₓ) and molybdenum oxides (MoOₓ), preferably WOₓ in outlet part of the catalyst article (1), to improve activity of the catalyst article (1) and its durability towards impurities. Particularly, and in the preferred embodiments, WOₓ, such as WO₃, serves to promote NO₂ formation in the Pt-rich Out-T coating layer, wherein its addition is consequently preferred.

The amount of tungsten oxide as WO₃ is in the range of about 1 - 30 g/L, preferably 3 - 10 g/L in parts of the catalyst article (1) where used. The amount of WOₓ in a dry coating is varied in the range of 1 - 20 wt-% as WO₃ in a layer where present.

Zirconium oxides e.g., zirconia (ZrO₂), can also be used to increase the stability of the catalyst article (1) and its resistance towards sulfur oxides and increase NO₂ formation. Zirconium is increasing the acidity and thus decreasing SOₓ adsorption on alumina-based support material. Zr can be present in all layers, but preferably it is in Out-T coating layer to promote and stabilize also NO₂ formation on Pt-rich outlet part. Total amount of ZrO₂ is in the range of about 1 - 30 g/L, preferably 3 - 10 g/L in parts of the catalyst article (1) where used. The amount of ZrO₂ in the dry coating is varied in the range of 1 - 20 wt-% in a layer where present.

Lanthanum oxides e.g., lanthana (La₂O₃), yttrium oxides e.g., yttria (Y₂O₅) and/or hafnium oxides (HfOₓ) serve to increase the NOₓ adsorption capacity of the catalyst article (1) and its stability.

NOₓ storage functions can also be applied in the catalyst article (1), preferably in its bottom (In-B and Out-B) coating layer and more preferably in its Out-B coating layer. When NOₓ adsorption occurs during cold-start with low NOₓ concentrations, mass transfer is not critical. The top layer protects the access of many poisons (solids, larger HCs, SO₂ molecule) into the bottom layer, where NOₓ adsorption materials are located.

La, Y, Hf and Ce oxides are NOₓ adsorbents. They are separated from the top layer in the preferred embodiments of the present disclosure, because they are often disturbing as fresh or after hydrothermal ageing Pt and Pd sites in oxidation reactions and increasing light-off temperatures. NO₂ is formed mainly on the top layer with a higher PGM loading and due to fast pore diffusion NO₂ travels into to bottom layer, where NO₂ is adsorbed on these adsorbents as weakly bound metal-NOₓ compounds or stable metal nitrates. The same metal oxides have also a property to adsorb sulfur oxides (SOₓ), which are therefore trapped in layers, where the PGM loading is low or zero.

When present, the amount of La₂O₃, Y₂O₅ and (or HfOₓ are in the range of about 1 - 10 g/L as stable oxides, preferably 3 - 6 g/L in parts of the catalyst article (1) where used. The amount of La₂O₃ in coating should be varied in the range of 1- 15 wt-% in a layer where present. Lanthanum is used preferably in the bottom layers to create NOₓ and SOₓ adsorption capacity and improve the absolute thermal durability next to substrate (2) surface, which enables to keep a good mechanical stability of layers even at high temperatures.

In the catalyst articles (1) of the present disclosure and in the preferred embodiments, the top layer prevents (diffusion and heat transfer) a too rapid desorption of NOₓ from the NOₓ adsorbents during fast exhaust gas heat-up periods.

In the catalyst articles (1) of the disclosure, NOₓ adsorbents, e.g., cerium oxides, are kept as bulk large particles to achieve a high NOₓ adsorption capacity, whereas PGMs are kept as finely dispersed small particles to achieve high catalytic activity and particularly Pt is known to be chemically very poison durable. Oppositely, a fast access of high HC concentrations into Pt-Pd sites is diffusion limited during DPF regeneration. Therefore, in the preferred embodiments of the present disclosure, it is important that the top layer has a higher PGM concentration than bottom layer.

In preferred embodiments of the present catalyst articles (1), the bottom coating layer of the catalyst article (1) can also comprise defined cerium oxide (CeOₓ), lanthanum oxide, yttrium oxide and/or hafnium oxides, which can be also stabilized mixed oxides. Here, the role of La, Y, Hf and Ce oxides is to increase NOₓ adsorption capacity. In some embodiments, the bottom layer can be free from Al, Ti and Si oxides or even include only defined Ce, La, Y and/or Hf oxides or their mixtures with optional PGMs.

The adsorption strength of SOₓ is higher on these La, Y, Hf and Ce oxides adsorbents than on e.g., alumina, which enables a selective SOₓ adsorption on Ce, La, Y and Hf oxides, keeping SOₓ on alumina low. Optionally, the bottom coating layer has a low PGM loading to improve NOₓ storage activity on the catalyst article (1). This bottom coating layer can comprise both Pt and Pd with Pt:Pd ratio of about 1:9 to about 9:1.

Preferably the bottom layer has a Pt or Pd only composition with a lower PGM loading (< 0.8 g/L, preferably < 0.4 g/L, more preferably < 0.2 g/L) to enhance NOₓ storage functions. Pt in the bottom layer is applied to increase NO oxidation to NO₂ in situ, near to NOₓ adsorbents, in addition to gas phase NO₂ diffusing from the top layer.

The location of NOₓ adsorbing materials can be designed more in detail for an optimal utilization. La, Y, Hf oxides as NOₓ and SOₓ adsorbents are located preferably in In-B coating layer, where NOₓ/SOₓ are then adsorbed more strongly than on Ce compounds. Ce-oxides as NOₓ adsorbents will be located preferably in Out-B coating layer, where the amounts of poisons and inhibiting HCs and CO are lower, temperatures are lower during engine start-up and NO₂ concentrations higher due to a Pt-rich top layer.

When the Pt-rich layer is better than low Pt/Pd catalysts in HC-SCR reactions, formed and desorbed NO₂ can be utilized better in that outlet coating layers. Of course, HC-SCR is proceeding also in inlet layers when HC concentration is higher. When the NOₓ adsorbent with higher desorption temperature (La/Y/Hf) are located first in the flow direction, then desorbed NOₓ is able to pass the outlet zone when not adsorbed on any Ce-compound present.

If Ce is located only in In-B layer and La/Hf/Y in Out-B layer, desorbed NOₓ will be adsorbed in downstream on La/Y/Hf sites. Therefore, in preferred embodiments, La, Y, and/or Hf are in an optimal structure located in In-B layers and Ce or stabilized Ce in Out-B layers. If focused mainly on low temperature adsorption-desorption, both In-B and Out-B coating layers may however include Ce.

Adsorbed NOₓ and SOₓ on adsorbents (e.g., Ce, La, Y and Hf oxides, zeolites) can be desorbed during passive (normal drive) or active regeneration. These compounds and PGM-zeolites have a property of NOₓ adsorption, which is based on NOₓ adsorption at low temperatures (<200°C) and desorption in lean exhaust gas conditions above 160-200°C. Therefore, NOₓ is adsorbed at low temperatures where an urea-selective catalytic reduction (SCR) catalyst downstream is not yet activated and desorbed at temperatures, where urea injection is started for SCR.

The adsorption-desorption property of the catalyst article (1) is applied to reach the challenging total NOₓ performance targets in the latest lean applications (e.g., diesel and H₂ engines). When the adsorption-desorption property is differentiated from PGM-rich layers and into the bottom layer, it does not disturb PGM interactions with their optimal supports. The mass transfer to PGM sites on top layers is required to be fast e.g., DPF regeneration conditions (high HC) but the adsorbed compounds will have more time to diffuse into bottom layers in use conditions.

When NOₓ trap agents are also trapping SOₓ in the catalyst article (1) of the present disclosure, SOₓ are kept far from main PGMs. To apply NOₓ adsorption and nitrate/NOₓ regeneration (decomposition) most efficiently, periodic enrichments (λ < 1.2, preferably < 1.0) can be also applied for the catalyst article (1) with NOₓ/SOₓ adsorbents.

Under these conditions, NOₓ is desorbed easily above 150°C and reduced on PGM sites. Ce, La, Y and Hf oxides are the preferably compounds for the application having enrichments with λ < 1.2. NOₓ and SOₓ recovery in use and regeneration conditions is easier with these compounds in comparison to conventional NOₓ trap elements such as barium (Ba) and potassium (K), which require higher temperatures particularly for SOₓ decomposition.

However, it is possible that these types of NOₓ adsorbents, e.g., earth alkali metals, such as strontium (Sr) and Ba, can be present in the catalyst article (1) to increase the adsorption capacity, if the enrichment strategy is very efficient (λ < 1.0) in the system. In diesel and dual-fuel applications, periodic DPF regeneration is required also, which will be a natural way to decompose, at least partly, adsorbed and more strongly bound NOₓ and SOₓ on the catalyst article (1) layers.

The NOₓ adsorption capacity of the Ce compounds can be controlled by e.g., the CeOₓ particle size and surface area (m²/g). When Ce is added as Ce oxide particles in a layer, the original properties of powder form material is selected to reach the best functionality. The use of very high surface area material and small particle size provides the highest the NOₓ adsorption capacity.

It is difficult to keep extreme initial surface area if temperatures are too high in an application. However, the highest NOₓ adsorption capacity was reached with Ce-oxide (Ce2) having a specific surface area as measured by the Brunauer-Emmett-Teller (BET) method in the range from 250 m²/g to 300 m²/g, preferably from 260 m²/g to 290 m²/g, but more preferably about 270 m²/g, and having an average particle size (d₅₀) of between 1 µm to 10 µm, preferably of 5 µm (d₅₀).

This type of Ce-oxides (Ce2) had still clearly higher adsorption capacity after hydrothermal (HT) ageing at 700°C for 20h than the other Ce-oxide (Ce1), which had a specific surface area (BET) as low as 140 m²/g when freshly prepared but a particle size, which was larger 11 µm (d₅₀). The best adsorption capacity and release can be connected to specific surface area (BET) of > 200 m²/g, preferably > 240 m²/g as fresh state preparation. These Ce compounds can be defined by the original particle size distribution of < 10 µm (d₅₀), preferably < 7 µm (d₅₀).

In addition to high-surface area CeO₂, soluble Ce compounds can be used in the same layer, to create small CeOₓ particles and act also as a binder. The role of binders is to bind larger solid particles together and create a mechanically durable, porous layer with a good adhesion on the substrate (2) surface. Zr-stabilized Ce (ZrCe) oxide is capable of a high adsorption capacity and specific surface area (BET) (ZrCe with 182 m²/g and 12 µm). Zr stabilization also prevents sulfur poisoning and improve thermal durability. In addition, manganese (Mn), titanium (Ti), and Praseodymium (Pr) promoted cerium oxides can also be used as a NOₓ adsorption material.

Zeolites such as Beta, ZSM-5, chabazite (CHA), AEI, ferrierite (Fer), Y or their combinations with a high Si/Al₂ ratio (SAR, 5 - 1000, preferably 10 - 50) can be added preferably in the bottom layers to increase hydrocarbon and/or NOₓ adsorption capacity at low temperatures. High SAR zeolites are good hydrocarbon traps without additional metals.

However, the adsorption of NOₓ and hydrocarbon can be promoted chemically by impregnating Pd or Pt on these zeolites, drying and calcining before adding into the washcoat slurries. If used, PGM comprising or PGM-free zeolites for hydrocarbon trapping are present preferably in the In-B coating layer.

PGMs can be added also into a ready zeolite comprising washcoat slurry. Pd on zeolites (e.g., CHA, Beta and Fer) has a property of NOₓ adsorption. Pd comprising zeolite for NOₓ adsorption is present preferably in In-B layer. The presence of Pt and/or Pd on these zeolites (e.g., Beta, ZSM-5) promotes and activate hydrocarbons to be adsorbed on zeolites. The concentration of PGMs is in the range of 0.1 - 3.0 wt-% of dry zeolite weight. Preferably, Pd is added on CHA or Fer and Pt on Beta or ZSM-5.

PGM components can be added in form of nitrates, ammonium/ammine compounds, chlorides, carbonates, sulfates, or their combinations in the washcoat slurry. The total amount of PGM components in coating layer is the range of about 0.1-10 wt-%, preferably 0.5-3 wt-% of the total amount of coating. Organic and inorganic acids as well ammonia, ammonium hydroxide and other inorganic hydroxides can be used to adjust pH of washcoat solution to improve activity, coatability and the adhesion of washcoat. Optionally, PGM components can be added beforehand directly on raw material particles to ensure their high concentration and location in any layer.

Support and promoter components such as aluminum, silicon, titanium, tungsten cerium, zirconium, lanthanum, hafnium, and yttrium as well as zeolites can be added as ready powders, oxides, or their precursors (nitrates, carbonates, hydroxides, ammonium compounds) individually into washcoat or by impregnating from a precursor solution directly to the catalyst article (1) layers.

Support and promoter material components can be also added as their mixed oxides, such as Si-Al, Ti-Al, Zr-Al, La-Al, Si-Zr, Si-Zr-Al, Ce-Zr and Ce-Zr-Al oxides, into washcoat or directly to the catalyst article (1) layers. The total amount of these materials in the catalyst article (1) is in the range of about 50-200 g/L, and more preferably 100-150 g/L.

The described disclosure has high activity in hydrocarbon and CO oxidation in front part of the catalyst article (1), enabling high hydrocarbon oxidation especially in DPF regeneration conditions (High hydrocarbon concentration, such as > 1% C₁), where oxidation is inhibited on conventional DOC or single PGM catalysts by high hydrocarbon.

Higher Pd amount is necessary to overcome that inhibition and improve thermal durability when temperature increase is high during fast oxidation with high hydrocarbon concentration using an excess of oxygen. Pt is promoting the oxidation of certain hydrocarbons, increases chemical durability e.g., against sulfur and forms a promoting interaction with Pd. The catalytic article (1) of the disclosure has also shown a high activity in NO oxidation to NO₂ in the rear part of the catalyst article (1).

The main part of oxidation reactions takes place in top coating layer of the catalyst article (1), preferably in In-T coating layer, where PGMs are mostly loaded there. Therefore, the internal mass transfer (pore diffusion) limitations are low, even if pores in the top layer can be partly filled by deposits in long-term use.

As shown in the experiments, under DPF regeneration conditions, the In-T coating layer is more active in hydrocarbon oxidation than the Out-T coating layer. Longer (> 50% of total length of substrate (2), preferably 55-70%) In-T coating layer with defined PGM loading and Pt:Pd ratio is necessary to overcome external and internal mass transfer limitations in the presence of high hydrocarbon concentrations. Longer In-T coating layer gives more residence time for catalysis and heat transfer in exothermic reactions (HC/CO oxidation). If the total coating amount is increased by thicker bottom layers, the backpressure increases, and radial flow distribution is improved resulting in higher hydrocarbon oxidation activity in DPF regeneration.

Thick bottom layers with low/zero PGM loadings and adsorbents creates higher adsorption capacities, which can be utilized for hydrocarbon and NOₓ trapping and removal. PGM loading is preferably also low, when PGM atoms partly blocks the NOₓ adsorption sites on NOₓ adsorbents. Even if the length of Out-T coating layer is shorter (<50%, preferably 30-45% of total length of the substrate (2)), the shorter length is long enough to reactions proceeding in the rear part of the catalyst article (1).

When hydrocarbon and CO are mainly oxidized in the In-T coating layer, the Out-T coating layer is mainly planned and optimized for NO oxidation. The concentrations of exhaust gas components (NO, hydrocarbon, CO) are much lower in rear part (Out-T coating layer), a shorter length and coating amount is enough to reach target conversions in normal exhaust and DPF regeneration conditions.

In special cases, the layer with NOₓ adsorbent can be located as a top layer, when the main function of the catalyst article (1) is NOₓ adsorption, a fast adsorption-desorption is required and the amounts of poisons in the exhaust gas are negligible.

However, the same compositions in layers by the disclosure can be applied (e.g., Figures 2 and 3). If having high PGM amounts in bottom layers, the PGM losses by erosion is very low, which protects e.g., SCR catalyst about PGM poisoning, particularly, when the ATS has no DPF (H₂ engine applications) .

The catalyst article (1) can be coated on a ceramic and metallic substrate (2). The substrate (2) is preferably a flow-through type substrate (2), but wall-flow filter structures can be applied in the catalyst article (1) design with layers.

In accordance with the disclosure monolithic catalyst substrates (2) made from ceramics or metal are preferred.

As is known in the art, ceramic substrates (2) (honeycombs) usually have square cells, while most metallic substrates (2) have sinusoidal channels. Other channel cross sections are nevertheless possible with the disclosure, including triangular, hexagonal, trapezoidal, or round.

A substrate (2) suitable for use with the disclosure has a cell density of 10 - 2000 cells per square inch (cpsi), but range preferably, as is customary in lean and diesel applications, from 100 to 600 cpsi. When the substrate (2) is a ceramic substrate (2) a wall thickness of from 10 to 500 µm is preferable, more preferably from between 50 to 200 µm for in lean and diesel application. When the substrate (2) is a metallic substrate (2), a wall thickness of the substrate is from 20 to 200 µm, preferably from 30 to 100 µm, or more preferably from 40 to 60 µm.

The catalyst article (1) is coated by spraying, dosing, or dipping of washcoat on the substrate (2) and any mixtures thereof to reach the correct amount and penetration depth and layer thickness of washcoat inside the catalyst article (1). Surface and slurry properties are modified with typical organic agents to enable the efficient coating process.

Active materials, such as Pt group metals, can be added on washcoat slurry or they are post-impregnated or chemisorbed from a precursor solution with organic or inorganic (typically water) solvent to the catalyst article (1) substrate (2) after porous support material has been added. PGMs can be added on raw materials before added into washcoat.

In the front part of the catalyst article (1), the In-B coating layer is coated first on the surface of uncoated part of the catalyst article (1) (substrate (2)) and the In-T coating layer is coated on the top of bottom coating layers. In the rear part of the catalyst article (1), the Out-B coating layer is coated first on the surface of uncoated part of the catalyst article (1) (substrate (2)) and the Out-T coating layer is coated on the top of outlet coating layers.

The schematic illustration, how these coating layers are located, is shown in Figures. 1, and 4 to 7, and in those figures, s1, s2, s3, s4, s5 and s6 represents the (radial) coating thickness of In-B, Out-B, In-T, Out-T, Mid-B and Mid-T coating layers, respectively. Because the (axial) lengths, L1, L2, L3, L4, L5, L6 of each coating layer can vary in the range of 0 - L (L1 + L2 + L5 ≤ L; L3 + L4 + L6 ≤ L) as shown in Figure 4, the top layers are not ideally on the top of the layers in the same location (inlet, middle, outlet) in flow direction.

If the catalyst article (1) has no middle coating layers, the lengths (L1 and L2) of In-B and Out-B coating layers is in the range of about 20 - 80%, more preferably about 50%, of total length of the catalyst article (1). Then, the lengths (L3 and L4) of In-T and Out-T coating layer is in the range of about 20-80%, preferably 30-70%, more preferably 40-60% and L3 > L4, of total length of the catalyst article (1).

If Mid-B coating layers are created in the catalyst article (1), the lengths of In-B, Mid-B and Out-B coating layer are in the range of about 5-70%, more preferably about 33% of total length of the catalyst article (1). Also, if Mid-T coating layers are created, the lengths of In-T, Mid-T and Out-T coating layer are in the range of about 5-70%, more preferably 20-50% of total length of the catalyst article (1).

The coating thickness of each one of these layers (In-B,In-T,Out-B,Out-T) can be 1-100 µm and preferably in lean and diesel application 5-50 µm. The total amount of coating of each coating layer can be about 10-200 g/L (grams of coating per substrate volume as liters), preferably about 40-100 g/L and more preferably about 50-80 g/L in all layers of the catalyst article (1). Generally, the catalyst article (1) composition can be created by any deposition methods (e.g., ALE, sol-gel) and including possibly organic vapor precursors for defined elements.

The In-B, Out-B, In-T and Out-T coating layers can also overlap each other, creating a layer where these layers are mixed. This is a way to form an additional middle coating layers (Mid-B and Mid-T) in the catalyst article (1) (Figure 5).

The middle layer can comprise also a bottom (Mid-B) and a top (Mid-T) layer as in Figure 5, or only Mid layer as in Figure 6. The middle layer can have also prepared in other ways, by adding several washcoat doses in a direction of the catalyst article (1) and thus forming a different composition in the middle layers in comparison to the inlet and outlet layers. The total coating thickness/amount in the middle layer accordingly can be lower or higher than in inlet and outlet layers as desired by a given external design target for a catalyst article (1) of the disclosure.

A higher coating amount is created if an overlap is utilized in the preparation. A lower coating amount is created if no overlap is formed but not the opposite bottom or top layer in the same coating depth from another direction.

In the same way, the PGM loading and Pt:Pd ratio differs between the outlet and inlet layers. The total PGM loading in middle layer can be higher or lower than in comparison to the inlet and outlet layers, totally or as single bottom and top layers. The benefit of having a higher coating amount is to create an after light-off (reaction initiation) region having a high amount of coating to balance a high heat formation.

A higher coating amount further creates a pressure drop in the channels which forces the gas to flow radially evenly through the channels. When the high coating amount/thickness is only present over a short distance, the total pressure drop increase is still low. The possible higher PGM loading in the middle layers has the benefit of faster reaching of the complete oxidation of hydrocarbons and CO.

In addition, when inlet and outlet PGM loading and Pt:Pd ratio are very different as tailored to different reactions, it is possible to have an intermediate composition in middle, where the properties are shifting stepwise from inlet to outlet compositions.

Depending on the application, it is possible to place more weight on the properties of the inlet (high hydrocarbon oxidation activity) or the outlet (high NO₂ formation activity) layers, whereby different catalytic outcomes are achieved simply by tailoring the partition sizes. The variation of the length of inlet, middle and outlet layers, consequently, is a tool to optimize the catalyst article (1) performance for an application.

In an embodiment (c.f. Figure 7), the catalyst article (1) of the disclosure can also comprise a 2^{nd} top layer, which is located at top of other coating layers from front or rear part of catalyst article (1) and comprises PGM components, preferably Pt and Pd. The length of the 2^{nd} top layer, if present, is in the range of 10-100%, preferably 20-40%, of total length of catalyst article (1).

NOₓ adsorbing materials (Ce, La, Y, Hf and Ce mixed oxides or mixture of these oxides, zeolite materials) in the catalyst article (1) is applied in the cold driving phases during the engine start-up or low speed/load driving conditions. NOₓ is adsorbed below 100 - 200°C in cold phases in the catalyst article (1) located before a deNOₓ unit (e.g., SCR, LNT) and then later desorbed due to the increasing temperature in normal driving conditions ideally around at 150-250°C. Here, the desorption temperature is low enough to release NOₓ adsorption capacity for next adsorption phase but high enough that e.g., a SCR catalyst and urea dosing downstream is already operating.

It is important that the NOₓ adsorbents are able to adsorb and desorb NOₓ in transient driving when temperatures during cruising vary up and down between 100-250°C.

In embodiments, the NOₓ adsorption compounds (e.g., Ce compounds with a high surface area, zeolites) are consequently selected in a way to have these low temperature adsorption-desorption properties. Here, Ce mixed oxides with Zr, Ti, Mn and/or Pr give a potential to increase NOₓ adsorption capacity or stability (thermal, sulfur tolerance).

Conventional NOₓ adsorbents (e.g., Ba) bind NOₓ too strongly and the desorption under driving conditions will start at too high temperatures. Even if SOₓ can be adsorbed on these low temperature adsorbents (e.g., Ce compounds), the formed sulfates or adsorbed SOₓ also decomposed easier in comparison to e.g., Ba sulfates. Zeolite based NOₓ adsorbents are durable for SOₓ, when aluminum silicates (zeolites) do not adsorb SOₓ. Pt is known to remain durable in the presence of SOₓ. When Pd is used with e.g., NOₓ adsorption materials, Pd sulfates are decomposed under typical lean conditions.

In addition, possible sulfates on these NOₓ adsorbents are decomposed also during DPF or typical SCR catalyst regeneration (for sulfur removal) conditions (e.g., at about 600°C). Sulfates on conventional NOₓ adsorbents are not decomposed yet in lean conditions at 600°C. La, Y and Hf are extending the NOₓ adsorption window to medium temperature ranges (above 200°C) to be combined with the low temperature NOₓ adsorbents (Ce compounds, zeolites).

In an embodiment, the catalyst article (1) of the disclosure can be applied as a single or multiple units in ATS to purify lean exhaust gases originating from combustion of diesel, gasoline, natural gas, biofuels, synthetic HC mixtures, hydrogen, ammonia, or their combinations (multi-fuel applications) or as a part of hybrid (electric and combustion engines) applications.

Also, an ATS can comprise DPF, oxidation catalyst, hydrolysis, SCR, and ammonia slip catalyst (ASC) units and the catalyst article (1) unit is usually located before those other exhaust treatment units by the flow direction. It is also possible that other ATS units, like NOₓ adsorption or special oxidation catalysts (e.g., for methane oxidation), are located before this catalyst article (1).

The present disclosure solves the above and below described problems both explicit and implicit and in particular concerns the following aspects and embodiments.

In a first aspect and embodiment a catalyst article (1) for exhaust gas purification in lean exhaust gas conditions comprising a passage (3) for permitting an exhaust gas to traverse the catalyst article (1), thereby defining an inlet and an outlet from the passage for the exhaust gas and a flow direction of passage for the exhaust gas traversing the catalyst article (1), the passage (3) presenting a substrate (2) surface for carrying one or more catalytically active layers (11,12,21,22) for converting at least a respective first and a respective second undesired chemical component contained in the exhaust gas into at least a corresponding first or a corresponding second desired chemical component during passage of the catalyst article (1) by the exhaust gas;
- where on the substrate (2) are arranged at least a first and a second catalytic partition (10,20), each respective catalytic partition (10,20) comprising at least a respective first and a respective second catalytic layer (11,12), (21,22) arranged such that the first respective catalytic layer (11,21) is proximal to the substrate (2) and the second respective catalytic layer (12,22) is distal from the substrate (2);
- where each of the first and second catalytic layers (11,12,21,22) are pairwise chemically distinct;
- where the first catalytic partition (10) is arranged in the passage (3) such that the exhaust gas while traversing the passage (3) first encounters the first catalytic partition (10) prior to encountering the second catalytic partition (20); and
- where the second catalytic partition (20) promotes a catalytic conversion of one of either the respective first or second undesired chemical components into the corresponding first or second desired chemical component and the first catalytic partition (10) substantially does not.

The present relates in a further aspect to a catalyst article (1) for exhaust gas purification in lean exhaust gas conditions presenting a substrate surface, where on the substrate surface are presented an inlet and an outlet coating composition, defined by flow direction, wherein each respective inlet and outlet coating composition comprises at least a respective inlet and outlet proximal coating layer adhering to the substrate surface, and a respective inlet and outlet distal coating layer adhering to the respective inlet and outlet proximal coating layer; the respective coating layers comprise porous Al, Si and/or Ti oxide for diffusive exchange with an exhaust gas traversing for contacting the exhaust gas with the respective catalytic coating layers; wherein
a. the inlet proximal (In-B) coating layer is placed at the inlet of the catalyst article (1) and comprises one or more catalytically active metals selected from a platinum-group metal (PGM) comprising Pt, Pd, Rh, Ir, Ru, Os, or noble metals as Ag, or Au at a loading of less than 0.8 g/L
b. the inlet distal (In-T) coating layer is placed at the inlet of the catalyst article (1) comprises one or more catalytically active metals selected from a platinum-group metal (PGM) comprising Pt, Pd, Rh, Ir, Ru, Os, Ag, noble metals as Ag, or Au in at a loading of 0.5 - 7.0 g/L
c. the outlet proximal (Out-B) coating layer is placed at the outlet of the catalyst article (1) and comprises one or more catalytically active metals selected from a platinum-group metal (PGM) comprising Pt, Pd, Rh, Ir, Ru, Os, or noble metals as Ag, or Au at a loading of less than 0.8 g/L
d. the outlet distal (Out-T) coating layer is placed at the outlet of the catalyst article (1) and comprises one or more catalytically active metals selected from a platinum-group metal (PGM) comprising Pt, Pd, Rh, Ir, Ru, Os, or noble metals as Ag, or Au in an amount of 0.1 - 2.0 g/L;
e. the outlet distal (Out-T) coating layer comprises tungsten (W), molybdenum (Mo), and/or zirconium (Zr) compounds, more preferably tungsten compounds, to promote NO oxidation to NO₂.

In an embodiment hereof the inlet and/or the outlet proximal (In-B and Out-B) coating layer comprises cerium (Ce) oxides or cerium mixed oxides, such as ZrCe, MnCe, TiCe, PrCe oxides, or their combinations, to promote NOₓ adsorption-desorption and NO₂ formation by desorption below 200°C.

Typically, cerium (Ce) oxides or cerium mixed oxides, such as ZrCe, MnCe, TiCe, PrCe oxides, or their combinations, have a high surface area above 140 m²/g, preferably above 200 m²/g, more preferably above 230 m²/g.

In a further embodiment cerium (Ce) oxides or cerium mixed oxides, such as ZrCe, MnCe, TiCe, PrCe oxides, or their combinations, are in form of solid particles which have a particle size (d₅₀) below 14 µm, preferably below 7 µm.

In a still further embodiment, the inlet and/or the outlet proximal (In-B and Out-B) coating layer comprises lanthanum (La), yttrium (Y) and hafnium (Hf) or a combination of them or promote NOₓ adsorption.

In a further embodiment, the inlet and/or the outlet proximal (In-B and Out-B) coating layer comprises Beta, ZSM-5, CHA, Fer and AEI zeolites or a combination of them to promote HC and NOₓ adsorption.

In a still further embodiment, middle coating layers, middle proximal (Mid-B) and middle distal (Mid-T), are created in between the inlet and outlet coating compositions.

In a further embodiment, inlet and/or the outlet proximal (In-B and Out-B) coating layers have a length of about 20-80% and more preferably about 50% ; inlet and/or the outlet distal (In-T and Out-T) coating layers have a length of about 20-80%, preferably about 30-70%, more preferably 30-70% and In-T is longer than Out-T layer of total length of substrate (2).

In a still further embodiment, the amount of coating of each coating layer can be about 10-200 g/L, preferably about 40-100 g/L and more preferably about 50-80 g/L in all layers of the catalyst article (1).

In a further embodiment, the Pt:Pd ratio in inlet distal (In-T) coating layer is in the range of 1:4 - 5:1, preferably 1:1 - 4:1, more preferably 2:1 - 3:1 and the Pt:Pd ratio in outlet distal (Out-T) coating layer is in the range of 3:1 - 30:1, preferably 4:1 - 15:1 and more preferably 5:1 - 10:1 or the Pt:Pd ratio in Out-T coating layer can be also 1:0 (Pt only, no Pd).

In a still further embodiment, the inlet distal (In-T) coating layer is more active in oxidation of carbon containing components than outlet distal (Out-T) coating layer, and Out-T coating layer is more active in oxidation of NO to NO₂ than In-T coating layer.

In a further aspect the present disclosure relates to a catalyst according to any one of the above embodiments and other embodiments described herein below which can be utilized in purification of exhaust gas emissions, which are lean in average, originating from the combustion of diesel, gasoline, biofuels, hydrogen, ammonia, natural gas and their combinations and which has an ability to oxidize hydrocarbons (HC), carbon monoxide (CO), hydrogen (H₂), ammonia (NH₃) and nitric oxide (NO) as well as adsorb and desorb nitrogen oxides (NOₓ), sulfur oxides (SOₓ), and hydrocarbons (HCs) or any combinations thereof in regular driving conditions and in particulate filter and catalyst regeneration conditions.

### EXAMPLES

### Sample preparation - Methods

The catalyst article (1)s of the present disclosure and reference samples were prepared by adding one or several washcoat slurries in specific sequence on ceramic flow-through substrates (2) with cell density of 400 cpsi and wall thickness of 100 µm or metallic substrate (2) with cell density of 300 cpsi after rolling and wall thickness of 50 µm. Washcoat slurries comprises platinum group metal (PGM) components (Pt and Pd), alumina, and other raw materials which are specified in examples in more detail.

First Al-compound and other possible metal oxide precursors were diluted in deionized water. Slurry was milled in a ball mill or continuous mill for some hours until washcoat slurry has reached target particle size. PGM components and other possible raw materials have been added together with pre-milled slurry, where water was the main liquid.

Ready washcoat slurry have been applied on ceramic substrates (2) by dipping, dosing, sucking, or blowing the washcoat to have target amount of washcoat on catalyst article (1)s of the present disclosure and reference samples. Optionally, ready washcoat slurry were brushed on metallic foil.

The washcoat amount was adjusted based on the amount of wet slurry and measured solid content in wet slurry. Coated catalyst article (1)s of the present disclosure and reference samples were dried in an air flow at 60-120°C after each coating step to remove excess of water.

The catalyst article (1)s of the disclosure and reference samples were calcined in static-air oven at 550°C for 1h in between coating layer additions and at 550°C for 4 hours after the addition of all coating layers.

Final calcination temperature, calcination time and heating ramps can be selected based on the used precursors and target properties of washcoat slurry to enable good adhesion and high activity of the catalyst article (1).

For example, final calcination temperature can be in the range about 500°C and about 700°C. The coating amount (g/L, grams of coating per substrate volume as liters), was calculated based on final weight of the catalyst article (1) and reference samples after calcination. More precisely, differences between each catalyst article (1) and reference samples are described in Table 1 and in examples 1-12.

**Table 1. Composition, platinum group metal (PGM) loading and Pt:Pd ratio in different coating layers and their averages as well as additional components (elements) used despite of alumina and PGM components.**

| **Example** | **PGM loading (g/L) in In-T/In-B//Out-T/Out-B layer** | **Pt:Pd ratio in In-T/In-B//Out-T/In-B layer or a single layer** | **Average PGM loading (g/L) and Pt:Pd ratio** | **Code (elements) In-T/In-B//Out-T/Out-B layer or top/bottom layer** |
|---|---|---|---|---|
| **1** | 0.88 / 0 // 0.88 / 0 | 1:0 / - // 1:0 / - | 0.88 Pt only | Pt-Al-W / Al (full-size) |
| **2** | 0.88 (Single layer with W) | 1:0 | 0.88 Pt only | Pt-Al-W (full-size) |
| **3** | 0.88 (Single layer, Reference) | 1:0 | 0.88 Pt only | Pt-Al (full-size) |
| **4** | 0.88 / 0 // 0.88 / 0 | 4:1 / - // 1:0 / - | 0.88 PGM, Pt:Pd = 9:1 | Pt-Pd-Al / Al // Pt-Al-W / Al |
| **5** | 0.88 / 0 // 0.88 / 0 | 1:0 / - // 1:0 / - | 0.88 Pt only | Pt-Al-W / Al |
| **6** | 0.88 / 0 // 0.88 / 0 | 4:1 / - // 4:1 / - | 0.88 PGM, Pt:Pd = 4:1 | Pt-Pd-Al / Al |
| **7** | 0.88 / 0 // 0.88 / 0 | 4:1 / - // 1:0 / - | 0.88 PGM, Pt:Pd = 9:1 | Pt-Pd-Al / Al // Pt-Al-W / Al |
| **8** | 0.88 / 0 // 0.88 / 0 | 4:1/-//9:1/- | 0.88 PGM, Pt:Pd = 5.7:1 | Pt-Pd-Al / Al // Pt-Pd-Al / Al |
| **9** | 0.88 / 0 // 0.88 / 0 | 2:1 / - // 1:0 / - | 0.88 PGM, Pt:Pd = 5:1 | Pt-Pd-Al / Al // Pt-Al-W / Al |
| **10** | 0.88 / 0 // 0.88 / 0 | 2:1 / - // 1:0 / - | 0.88 PGM, Pt:Pd = 5:1 | Pt-Pd-Al / Al // Pt-Al / Al |
| **11a** | 0.88 / 0.17 // 0.88 / 0.17 | 1:0 / 1:0 // 1:0 / 1:0 | 1.06 Pt only | Pt-Al-W / Pt-Ce1 |
| **11b** | 0.88 / 0.17 // 0.88 / 0.17 | 4:1 / 1:0 // 4:1 / 1:0 | 1.06 Pt:Pd = 5:1 | Pt-Pd-Al / Pt-Ce1 |
| **11c** | 0.88 / 0 // 0.88 / 0 | 1:0 / - // 1:0 / - | 0.88 Pt only | Pt-Al-W / Ce1 |
| **11d** | 0.88 / 0.17 // 0.88 / 0.17 | 1:0 / 1:0 // 1:0 / 1:0 | 1.06 Pt only | Pt-Al-W / Pt-ZrCe-La |
| **11e** | 0.88 / 0.17 // 0.88 / 0.17 | 1:0 / 1:0 // 1:0 / 1:0 | 1.06 Pt only | Pt-Al-W / Pt-ZrCe |
| **11f** | 0.88 / 0.17 // 0.88 / 0.17 | 4:1 / 0:1 // 4:1 / 0:1 | 1.06 PGM, Pt:Pd = 2:1 | Pt-Pd-Al / Pd-Fer |
| **11g** | 0.88 / 0.17 // 0.88 / 0.17 | 1:0 / 1:0 // 1:0 / 1:0 | 1.06 Pt only | Pt-Al-W / Pt-Al |
| **11h** | 0.88 / 0.17 // 0.88 / 0.17 | 4:1 / 1:0 // 4:1 / 1:0 | 1.06 PGM, Pt:Pd = 5:1 | Pt-Pd-Al / Pt-Ce2 |
| **11i** | 0.88 / 0.17 // 0.88 / 0.17 | 1:0 / 1:0 // 1:0 / 1:0 | 1.06 PGM, Pt only | Pt-Al-W / Pt-Ce2 |
| **11j** | 0.88 / 0 // 0.88 / 0 | 1:0 / - // 1:0 / - | 0.88 PGM, Pt only | Pt-Al-W / Al |
| **11k** | 0.88 / 0 // 0.88 / 0 | 4:1 / - // 4:1 / - | 0.88 PGM, Pt: Pd=4:1 | Pt-Pd-Al / Al |
| **12a** | 0.88 / 0.17 // 0.88 / 0.17 | 4:1 / 1:0 // 1:0 / 1:0 | 1.06 g/L PGM, Pt:Pd = 11:1 | Pt-Pd-Al / Pt-Ce2 // Pt-Al-W / Pt-Ce2 |
| **12b** | 0.88 / 0.17 // 0.88 / 0 | 4:1 / 1:0 // 1:0 / - | 0.97 g/L PGM, Pt:Pd = 10:1 | Pt-Pd-Al / Pt-Ce2 // Pt-Al-W / Al |
| **12c** | 0.88 / 0.17 // 0.88 / 0.17 | 4:1 / 0:1 // 1:0 / 1:0 | 1.06 g/L PGM, Pt:Pd = 5:1 | Pt-Pd-Al / Pd-Fer // Pt-Al-W / Pt-Ce2 |
| **12d** | 0.88 / 0 // 0.88 / 0 | 4:1 / - H 1:0 / - | 0.88 g/L PGM, Pt:Pd=9:1 | Pt-Pd-Al / Al // Pt-Al-W / Al |

The composition of examined samples in experiments and table 1 were described according to the general structure detailed in Figure 1, except for single layer compositions. Therefore, for samples having the same top or bottom layer composition means that In-T and Out-T had the same composition or In-B and Out-B had the same composition in experiments.

Many samples in Table 1 were made for optimizing separately the inlet or outlet layer compositions for HC/CO oxidation, NO oxidation to NO₂ or NOₓ adsorption-desorption properties, which were optimally differentiated in the catalyst article (1) composition. This is a way to see better the effect of single variables, in accordance with the present inventors' realization that the effect of a zoned catalyst partition is largely an additive effect of the two or more zoned partitions present on the catalyst article (1).

Finally, samples with four different layer compositions (In-T, In-B, Out-T and Out-B coating layers) were examined by Example 12 samples, to see the overall functionality of the catalyst article (1) comprising two catalytic partitions (10,20).

### Example 1

An example having a different porous coating located in bottom and top layer on ceramic substrate (2) (2.5L for full-size testing) as shown in Figure 2. Bottom coating layer comprised 100 wt-% alumina and no PGM components. In the coating preparation for the top layer of the catalyst article (1), tungsten and platinum precursor materials were added to pre-milled alumina comprising slurry.

After coating, drying and calcination, the coating layer comprised 87.9 wt-% alumina, 10.6% tungsten oxide (WO₃) and 1.52 wt-% platinum. Total PGM loading in this example was 0.88 g/L Pt and example was free of Pd.

The coating compositions were the same in inlet bottom (In-B) and outlet bottom (Out-B) layers. Inlet top (In-T) and outlet top (Out-T) coating layers had the same composition too in accordance with the structure of Figure 2.

This example was made to show the W promotion for NO₂ formation to be applied in Out-T coating layer in the catalyst article (1).

In the context of the present disclosure, a layered and coated catalyst article (1) in accordance with Example 1 is suitable for use as the outlet partitioning (20) of the catalyst article (1) of the present invention.

### Example 2

A single coating layer with tungsten was applied for this example (substrate (2), 2.5L for full-size testing) in accordance with the prior art and with Figure 2, where tungsten and platinum precursor materials were added to pre-milled alumina comprising slurry.

After coating, drying and calcination, the coating layer comprised 93.9 wt-% alumina, 5.3% tungsten oxide and 0.76 wt-% platinum. PGM loading in this example was 0.88 g/L Pt and example was free of Pd. That composition can be applied as an example layer with W promotion in the catalyst article (1).

### Example 3 - Reference

A reference oxidation catalyst of the prior art had a single coating layer on a ceramic substrate (2) (2.5L for full-size testing). Coating layer comprised 99.2 wt-% alumina and 0.76 wt-% platinum. The PGM loading in this example was 0.88 g/L Pt (no Pd).

The results of Examples 1 to 3 are shown in Figure 8, detailing how the NO to NO₂ oxidation can be positively influenced by having a bi-layered structure, wherein the topmost layer (examples 1 and 2) comprises both tungsten (W) and platinum and/or palladium, demonstrating the suitability of such bi-layered structures as an outlet partitioning in accordance with the present disclosure.

### Example 4

This example had different porous coating located in the bottom and top coating layers on a ceramic substrate (2) (for SGB testing) as shown in Figure 3.

Bottom coating layer comprised 100 wt-% alumina and no PGM components. The coating compositions were the same in inlet bottom (In-B) and outlet bottom (Out-B) coating layers.

The Inlet top (In-T) coating layer was in front part of catalyst article (1) by flow direction and comprised 99.2 wt-% alumina, 0.61 wt-% platinum and 0.15 wt-% palladium. In the Outlet top (Out-T) washcoat, tungsten and platinum precursor materials are added to pre-milled alumina comprising slurry.

After coating, drying and calcination, Out-T coating layer comprised 93.9 wt-% alumina, 5.3% tungsten oxide and 0.76 wt-% platinum. PGM loading in front (inlet) part was 0.88 g/L PGM and Pt:Pd ratio was 4:1. PGM loading in the rear (outlet) part was 0.88 g/L Pt (no Pd).

Average PGM loading in this example was 0.88 g/L PGM and Pt:Pd ratio was 9:1. Inlet top (In-T) and outlet top (Out-T) coating layers had the different compositions and Pt:Pd ratio.

This catalyst article (1) example was made to show the Pt:Pd promotion both in In-T coating layer for HC/CO oxidation and the tungsten (W) promotion with Pt for NO₂ formation in Out-T coating layer, thereby demonstrating the feasibility of having a partitioned coating structure on the catalyst article (1) of the present disclosure and simultaneously promoting both HC/CO oxidation and NO to NO₂ oxidation.

### Example 5

This example had different porous coating located in bottom and top layer on ceramic substrate (2) (for SGB testing) as shown in Figure 2. The bottom coating layer comprised 100 wt-% alumina and no PGM components. The coating compositions were the same in inlet bottom (In-B) and outlet bottom (Out-B) coating layers.

In preparation of top coating layer, tungsten and platinum precursor materials are added to pre-milled alumina comprising slurry. After coating, drying and calcination, the coating layer comprised 93.9 wt-% alumina, 5.3% tungsten oxide and 0.76 wt-% platinum. PGM loading in this example was 0.88 g/L Pt and it was free of Pd. Inlet top (In-T) and outlet top (Out-T) coating layers had the same composition too.

This example was made to show the W promotion for NO₂ formation to be applied in Out-T coating layer in the catalyst article (1).

In the context of the present disclosure, a layered and coated catalyst article (1) in accordance with Example 5 is suitable for use as the outlet partitioning (20) of the catalyst article (1) of the present invention.

### Example 6

This example had different porous coating located in bottom and top layer on ceramic substrate (2) (for SGB testing) as shown in Figure 2. Bottom coating layer comprised 100 wt-% alumina and no PGM components. The coating compositions were the same in inlet bottom (In-B) and outlet bottom (Out-B) coating layers. Top coating layer 99.2 wt-% alumina, 0.61 wt-% platinum and 0.15 wt-% palladium. PGM loading in this example was 0.88 g/L PGM and Pt:Pd ratio was 4:1.

This catalyst example was made to show the Pt:Pd promotion in In-T coating layer for HC/CO oxidation in the catalyst article (1).

In the context of the present disclosure, a layered and coated catalyst article (1) in accordance with Example 6 is suitable for use as the inlet partitioning (10) of the catalyst article (1) of the present invention.

### Example 7

A catalyst article (1) which has different porous coatings located in the bottom, In-T and Out-T coating layers on a ceramic substrate (2) (for SGB testing) as shown in Figure 3. Bottom coating layer comprised 100 wt-% alumina and no PGM components.

The coating compositions were the same in inlet bottom (In-B) and outlet bottom (Out-B) coating layers. The Inlet top (In-T) coating layer was in the front part of catalyst article (1) by flow direction and comprised 99.2 wt-% alumina, 0.61 wt-% platinum and 0.15 wt-% palladium. In the Outlet top (Out-T) coating, tungsten and platinum precursor materials are added to pre-milled alumina comprising slurry.

After coating, drying and calcination, Out-T coating layer comprised 93.9 wt-% alumina, 5.3% tungsten oxide and 0.76 wt-% platinum. PGM loading in front part was 0.88 g/L PGM and Pt:Pd ratio was 4:1. PGM loading in rear part was 0.88 g/L Pt and this part was free of Pd. Average PGM loading in this example was 0.88 g/L PGM and Pt:Pd ratio was 9:1. Therefore, Inlet top (In-T) and outlet top (Out-T) coating layers had different compositions and Pt:Pd ratios.

This catalyst article (1) example was made to show the Pt:Pd promotion both in In-T layer for HC/CO oxidation and W promotion with Pt for NO₂ formation in Out-T coating layer, showing in the context of the present invention the possibility of partitioning these two catalytic processes onto the same catalyst article (1).

### Example 8

This reference example had different porous coatings located in the bottom, In-T and Out-T coating layers on a ceramic substrate (2) (for SGB testing) as shown in Figure 3.

Bottom coating layer comprised 100 wt-% alumina and no PGM components. The coating compositions were the same in inlet bottom (In-B) and outlet bottom (Out-B) coating layers. Inlet top (In-T) coating layer was in the front part of catalyst article (1) by flow direction and comprised 99.2 wt-% alumina, 0.61 wt-% platinum and 0.15 wt-% palladium.

Outlet top (Out-T) coating layer was in rear part of catalyst article (1) by flow direction and comprised 99.5 wt-% alumina, 0.68 wt-% platinum and 0.08 wt-% palladium. PGM loading in front part was 0.88 g/L PGM and Pt:Pd ratio was 4:1. PGM loading in rear part was 0.88 g/L PGM and Pt:Pd ratio was 9:1. Average PGM loading in this example was 0.88 g/L PGM and Pt:Pd ratio was 5.7:1. Therefore, Inlet top (In-T) and outlet top (Out-T) coating layers had the different compositions and Pt:Pd ratio.

This example was made to show the effect of Pt:Pd ratio in In-T and Out-T coating layers in the absence of W on HC/CO/NO oxidation.

### Example 9

This catalyst article (1) had different porous coating located in the bottom, In-T and Out-T coating layers on a ceramic substrate (2) (for SGB testing) as shown in Figure 3.

Bottom coating layer comprised 100 wt-% alumina and no PGM components. The coating compositions were the same in inlet bottom (In-B) and outlet bottom (Out-B) coating layers. The Inlet top (In-T) coating layer was in front part of catalyst article (1) by flow direction and comprised 99.2 wt-% alumina, 0.51 wt-% platinum and 0.25 wt-% palladium.

In the Outlet top (Out-T) washcoat, tungsten and platinum precursor materials are added to pre-milled alumina comprising slurry. After coating, drying and calcination, Out-T coating layer comprised 93.9 wt-% alumina, 5.3% tungsten oxide and 0.76 wt-% platinum. PGM loading in front part was 0.88 g/L PGM and Pt:Pd ratio was 2:1. PGM loading in rear part was 0.88 g/L Pt (no Pd). Average PGM loading in this example was 0.88 g/L PGM and Pt:Pd ratio was 5:1. Therefore, Inlet top (In-T) and outlet top (Out-T) coating layers had the different compositions and Pt:Pd ratio.

This catalyst article (1) example was made to show the Pt+Pd promotion both in In-T coating layer for HC/CO oxidation and W promotion with Pt for NO₂ formation in Out-T coating layer.

### Example 10

This example had different porous coatings located in the bottom, In-T and Out-T coating layers on a ceramic substrate (2) (for SGB testing) as shown in Figure 3.

Bottom coating layer comprised 100 wt-% alumina and no PGM components. The coating compositions were the same in inlet bottom (In-B) and outlet bottom (Out-B) coating layers.

The Inlet top (In-T) coating layer was in front part comprised 99.2 wt-% alumina, 0.51 wt-% platinum and 0.25 wt-% palladium. Out-T coating layer comprised 99.2 wt-% alumina, and 0.76 wt-% platinum. PGM loading in front part was 0.88 g/L PGM and Pt:Pd ratio was 2:1. PGM loading in rear part was 0.88 g/L Pt (no Pd).

Average PGM loading in this example was 0.88 g/L PGM and Pt:Pd ratio was 5:1. Therefore, Inlet top (In-T) and outlet top (Out-T) coating layers had the different compositions and Pt:Pd ratio.

This example was made to show the effect of Pt:Pd ratio in In-T and Out-T coating layers in the absence of W on HC/CO/NO oxidation.

### Example 11a-k

These examples had different porous washcoats located in the bottom and top coating layers on a ceramic substrate (2) (for SGB testing) as shown in Figure 2. The bottom coating layer contained respectively Pt-Ce1 (Example 11a-b), Ce1 (11c), Pt-ZrCe-La (11d), Pt-ZrCe (11e), Pd-Fer (11f) and Pt-alumina (coded Pt/Al, (11g), Pt-Ce2 (11h-i) and alumina (11j-k). Ce1 and Ce2 are added as ready powders: Ce1 with 149 m²/g and d₅₀ of 11 µm; Ce2 with 270 m²/g and d₅₀ of 5 µm; ZrCe with 182 m²/g and d₅₀ of 12 µm. Ce nitrate was used as a binder and additional NOₓ adsorbent source with other Ce materials.

However, it was seen that also Al sol or other binders can applied as binders. Therefore, Ce1 and Ce2 bottom layers comprised only Ce and ZrCe layer comprised of Ce and Zr. Ce, La, ZrCe are present in the coating layer as their stable oxides or their mixtures (e.g., CeO₂, La₂O₃, ZrO₂, generally CeOₓ, LaOₓ, ZrOₓ) in the use conditions. La was added as La nitrate solution and Zr as Zr nitrate solution, resulting in a good dispersion of Zr and La on other porous materials.

Therefore, the 11d sample was composed of Zr, Ce and La in the final layer. The exact oxidation state of metal oxides is dependent on temperature and gas composition in preparation and use. These compounds can also form aluminates in the presence Al oxides.

The coating compositions were the same in inlet bottom (In-B) and outlet bottom (Out-B) coating layers in each single example. Examples 11a,b,d,e,g,h,i comprised 0.15 wt-% platinum, Example 11f comprised 0.15 wt-% palladium and Example 11c,j,k had no PGMs in inlet and outlet bottom layers. Inlet top (In-T) and outlet top (Out-T) coating layers had the same composition in each single example. Examples 11a,c,d,e,g,i,j comprised 0.76 wt-% platinum with 5.3 wt-% tungsten oxide and Examples 11b,f,h,k comprised 0.61 wt-% platinum with 0.15 wt-% palladium. Total PGM loading with examples 11a,b,d,e,f,g,h,i was 1.06 g/L PGM and with example 11c,j,k was 0.88 g/L PGM.

In the context of the present disclosure, Example 11 illustrate the variational possibilities for the desired chemistry of the outlet partition (examples 11a,c,d,e,g,i,j) in the presence of tungsten (W) and comparative examples of the prior art (examples 11b,f,h,k) which are suitable for use in the chemistry of the inlet partition.

### Example 12a-d

These catalyst article (1)s of the present disclosure had 4 different coating compositions located in the In-T, In-B, Out-T and Out-B coating layers on a ceramic substrate (2) (for SGB testing) as shown in Figure 17.

These inlet and outlet layers were prepared by the materials and methods as described in Example 11. In-B coating layer comprised Pt-Ce2 (12a-b), Pd-Fer (12c) and alumina (12d), and the coating layer comprised 0.15 wt-% platinum (Examples 12a,b) or 0.15 wt-% palladium (Example 12c) or no PGMs (Example 12d). Out-B layer comprised Pt-Ce2 (12a,c), alumina (12b,d), and coating layer comprised 0.15 wt-% platinum (Examples 12a,c) or no PGMs (Example 12b,d). Example 12d, consequently, is comparative to Examples 12a-c.

The In-T coating layer comprised 0.61 wt-% platinum and 0.15 wt-% palladium (Examples 12a-d). Out-T coating layer comprised 0.76 wt-% platinum and 5.3 wt-% tungsten oxide (Examples 12a-d). Total PGM loading was 1.06 g/L PGM with examples 12a,c and 0.97 g/L PGM with example 12b and 0.88 g/L PGM with example 12d. Inlet top (In-T) and outlet top (Out-T) coating layers in each single example had the different compositions and Pt:Pd ratio. Inlet bottom (In-B) and outlet bottom (Out-B) coating layers in examples had various compositions and PGMs.

These catalyst article (1) examples were made to show the Pt+Pd promotion both in In-T layer for HC/CO oxidation, W promotion with Pt for NO₂ formation in Out-T coating layer and NOₓ adsorption-desorption properties to be utilized for NOₓ removal in bottom layers.

### Activity measurements - Tests

### Method of Testing

The catalytic activity of small cylinder-shape test size samples (diameter 14mm, length 75mm) was investigated by synthetic gas bench (SGB) experiments. Test size samples were drilled from full-size ceramic substrates (2) (1.2 dm³ in examples) or rolled from coated metallic foil, and then, placed into tubular metal tube reactor. Samples were tested 1) as fresh or 2) after hydrothermal aging (HT) at 700°C for 20 h (H₂O vapor concentration was 10 volume-% during aging) or 3) after hydrothermal (HT) aging at 700°C for 20 h + sulfur dioxide (SO₂) aging at 400°C for 20 hours (SO₂ concentration was 25 ppm during aging).

The activity of samples was studied in light-off tests with two gas mixtures, which simulated diesel exhaust gas composition: 1) Normal gas mixture (named as 'normal' in Figure. 10) consisted of 10 ppm C₁₀H₂₂ (decane) 10 ppm C₇H₈ (toluene) 40 ppm C₃H₆ (propene), 300 ppm CO, 500 ppm NO, 10% O₂, 6% H₂O, 6% CO₂, bal. Nitrogen (N₂) and space velocity (SV) was 50.000 h⁻¹ and 2) Regeneration gas mixture (named as 'reg' in Figure. 10) consisted of 4000 ppm C₃H₆, 2000 ppm CO, 200 ppm NO, 6% O₂, 6% H₂O, 6% CO₂, balance N₂ and space velocity was 50.000 h⁻¹.

The activity of the samples was tested in THC oxidation where light-off temperature for THC (temperature when 50% THC conversion was achieved) and in NO oxidation to NO₂ during light-off test.

The activity of SGB test samples was studied also in NOₓ adsorption/desorption experiments. Studied samples were first pre-treated at 500°C for 10 min with gas mixture containing 13% O₂, 6% H₂O and balance N₂ followed by cooling down to 120°C in same gas mixture. NO adsorption phase was carried out at 120°C in gas mixture containing 100ppm NO, 13% O₂, 6% H₂O and balance N₂.

Then, NOₓ desorption phase was done by heating the sample from 120°C up to 500°C (10°C/min), in gas mixture containing 6% H₂O and balance N₂. Space velocity was 50.000 h⁻¹ during all test phases.

The NOₓ adsorption capacity (µmol/g_{coating}) was defined based on measured NOₓ amount during NOₓ adsorption and desorption phases. NOₓ can be adsorbed physically or chemically on catalyst surfaces and adsorbents, e.g., as nitrates or nitrites or their precursors.

NOₓ adsorption capacity detected by desorption is related to more strongly bound NOₓ than capacity by step exchange method. NOₓ release by temperature directly showed the adsorption strength, which is an important property in the utilization of NOₓ adsorption for NOₓ control.

The total adsorption capacity was calculated by the desorbed NOₓ at 120 - 500°C but in addition it was calculated as low temperature desorption in the range of 120 - 200°C. Relative desorbed NOₓ (0-1.0 or 0-100%) was defined based on the ratio of desorbed NOₓ (cumulatively) until sample reaching certain temperature (e.g., 200°C) and total amount of desorbed NOₓ during heat up phase.

The catalytic activity of full-size samples (2.5 dm³ in examples) was investigated in diesel engine experiments in steady-state conditions. Samples were studied 1) as fresh or and 2) after hydrothermal aging at 700°C for 5 hours (H₂O vapor concentration of 10 volume-% during aging).

In engine experiments, exhaust gas emitted from Agco Sisu 4.9L was utilized and space velocity was 50.000 - 250.000 h⁻¹ depending on engine speed and torque. The activity of the samples was studied in NO oxidation NO₂ during steady-state experiment. More precisely each SGB and diesel engine experiment are described in test results in Figures 8-17 and Tables 2-3.

### Test Results

### Test Results in Figure 8

The activity of catalyst article (1) by example 1, coating layer composition by example 2 and the reference catalyst by example 3 was investigated in steady-state engine experiments as fresh. Results are shown in Figure 8.

The results of examples 1, 2 and 3 differed from each other in respect of NO oxidation to NO₂. NO oxidation to NO₂ over W+Pt comprising layered sample (Example 1) was 6 - 14% higher than over Pt comprising single layer sample (Example 3) at 220 - 380°C. NO oxidation to NO₂ over W+Pt comprising single layer sample (Example 2) was 3 - 6% higher than over Pt comprising single layer sample (Example 3) at 220 - 380 °C.

The results clearly show the promotion of tungsten and double-layer structure on NO₂ formation in comparison to single layer sample without tungsten.

### Test Results in Figure 9

The activity of catalyst article (1) by examples 4 and 5 and the reference catalyst by example 6 was investigated in light-off experiments in synthetic gas bench (SGB) as hydrothermally aged at 700°C (HT700). Results are shown in Figure 9. The results of examples differed from each other in respect of in NO oxidation NO₂. The results relating to effect of tungsten and zone coating on studied catalyst article (1) are presented.

Following this embodiment, the NO oxidation to NO₂ over sample with Pt+Pd in In-T coating layer and W+Pt in Out-T coating layer (Example 4) and sample with W+Pt in top layer (Example 5) was 7 - 20% higher at 210 - 350°C than NO oxidation to NO₂ over Pt+Pd in top layer (Example 6).

The results reveal the NO₂ formation improvement by using W+Pt in Out-T coating layer, instead of Pt+Pd.

### Test Results in Figure 10

The activity of catalyst article (1) by examples 4 and 5 and the reference catalyst by example 6 was investigated in light-off experiments in synthetic gas bench (SGB) as HT700 aged. Results are shown in Figure 10. The catalyst article (1) examples differed from each other in respect of THC light-off temperature. The results relating to effect of tungsten and zone coating on the studied catalyst article (1) are presented.

Following this embodiment, the THC light-off temperature on zoned sample with Pt+Pd in In-T coating layer and W+Pt in Out-T coating layer (Example 4) and sample with Pt+Pd in top layer (Example 6) was 4 - 12°C lower than THC light-off temperature on sample with W+Pt in top layer (Example 5) under normal gas mixtures. Under regeneration gas mixtures, THC light-off temperature on examples 4 and 6 samples was 26 - 32°C lower than THC light-off temperature on example 5.

The results show that the use Pt+Pd in In-T coating layer is required for high THC oxidation activity at low temperatures.

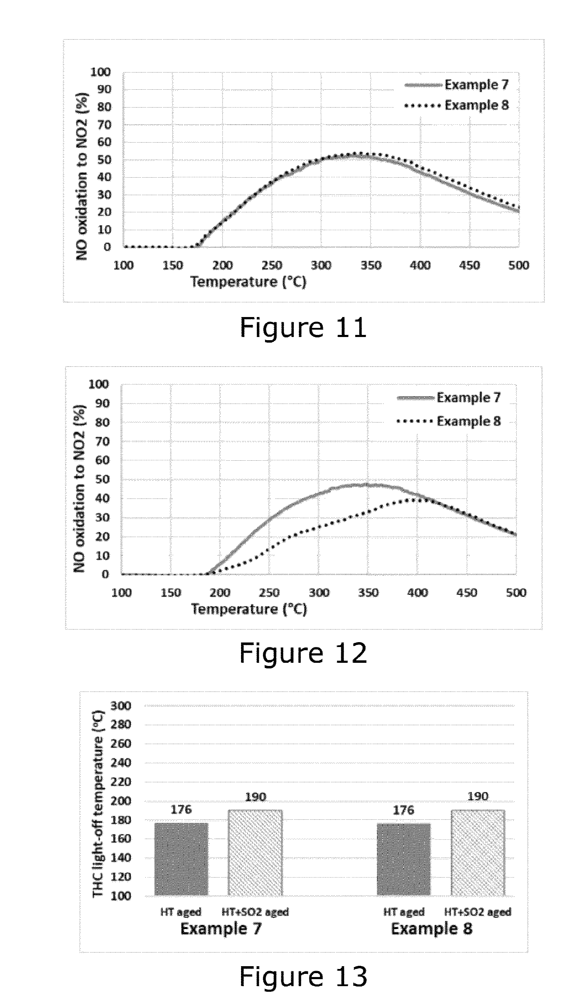

### Test Results in Figure 11

The activity of catalyst article (1) by example 7 and the reference catalyst by example 8 was investigated in light-off experiments in synthetic gas bench (SGB) as HT700°C aged. The results relating to effect of tungsten and Pt:Pd ratio on catalyst article (1) are presented in Figure 11.

Following this embodiment, samples with Pt+Pd in In-T coating layer and W+Pt in Out-T coating layer (Example 7) were able to reach same the NO oxidation to NO₂ as samples with Pt+Pd in both In-T and Out-T coating layers (Example 8), proving the effectiveness of using tungsten as a cheaper substituent for platinum and palladium in NO to NO₂-oxidation catalyst article (1)s.

The results show that samples with high Pt:Pd ratio in Out-T coating layer have same NO₂ formation than samples with W+Pt as HT aged.

### Test Results in Figure 12

The activity of catalyst article (1) by example 7 and the reference catalyst by example 8 was investigated in light-off experiments in synthetic gas bench (SGB) as HT aged at 700°C for 20 hours and SO₂ aged at 400°C for 20 hours. The results relating to effect of tungsten and Pt:Pd ratio on catalyst article (1) are presented in Figure 12.

Following this embodiment, the NO oxidation to NO₂ over sample with Pt+Pd in In-T coating layer and W+Pt in Out-T coating layer (Example 7) was 10 - 18% higher at 220 - 360°C than NO oxidation to NO₂ over sample with Pt+Pd in both In-T and Out-T coating layers (Example 8).

The results show that the use of W+Pt in Out-T coating layer gives good resistance towards sulfur in comparison with Pt+Pd samples (even with high Pt:Pd ratio).

### Test Results in Figure 13

The activity of catalyst article (1) by examples 7 and the reference catalyst by example 8 was investigated in light-off experiments in synthetic gas bench (SGB) as HT aged at 700°C for 20 hours and/or SO₂ aged at 400°C for 20 hours. The results relating to effect of tungsten and Pt:Pd ratio on studied catalyst article (1) are presented in Figure 13.

Following this embodiment, samples with Pt+Pd in In-T coating layer and W+Pt in Out-T coating layer (Example 7) were able to reach same the THC light-off temperature (T₅₀) than samples with Pt+Pd in both In-T and Out-T coating layers (Example 8) under normal diesel gas mixture.

The results reveal that the use of W+Pt or Pt+Pd in Out-T coating layer give same THC oxidation activity in studied conditions.

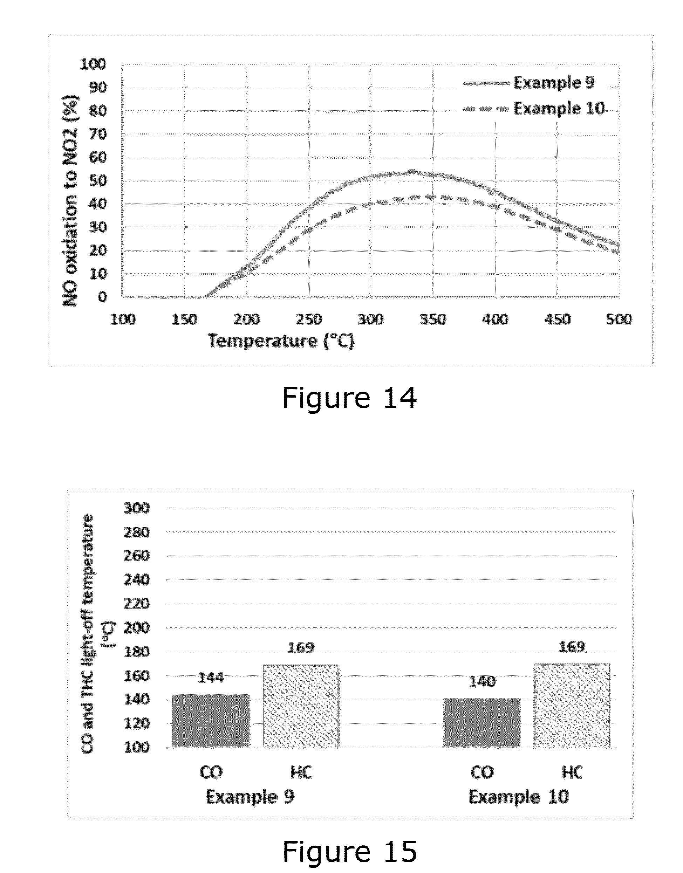

### Test Results in Figure 14

The activity of catalyst article (1) by example 9 and the reference catalyst by example 10 was investigated in light-off experiments in synthetic gas bench (SGB) as HT700 aged. The results relating to effect of tungsten on studied catalyst article (1) are presented in Figure 14.

Following this embodiment, the NO oxidation to NO₂ over sample with W+Pt in Out-T coating layer (Example 9) was 8 - 12 % higher at 230 - 380°C than NO oxidation to NO₂ over sample with only Pt in Out-T coating layer (Example 10).

The results show that W promotes the NO₂ formation on studied samples.

### Test Results in Figure 15

The activity of catalyst article (1) by examples 9 and the reference catalyst by example 10 was investigated in light-off experiments in synthetic gas bench (SGB) as HT700 aged. The results relating to effect of tungsten on studied catalyst article (1) are presented in Figure 15.

Following this embodiment, the samples with Pt+Pd in In-T coating layer and W+Pt in Out-T coating layer (Example 9) reached the same THC light-off temperature (T₅₀) and 4°C higher CO light-off temperature as the samples with only Pt in Out-T coating layer (Example 10) under normal diesel gas mixture.

The results show that W has very minor effect on CO and THC oxidation activities on sample containing Pt (no Pd) in Out-T coating layer.

### Test Results in Figure 16 and Table 2 - NOₓ adsorption and desorption capacity

The activity of 2-layer catalyst compositions by examples 11 a-g was investigated in NOₓ adsorption-desorption experiments in synthetic gas bench (SGB) as fresh. These catalyst compositions simulated the various inlet and outlet compositions in the catalyst article (1). Catalysts were treated in lean conditions at 500°C before NOₓ adsorption step. NOₓ adsorption capacity was shown in the next tables by the results in desorption phase.

Using this embodiment, NOₓ adsorption capacity is increased significantly by adding NOₓ adsorbents (Ce, ZrCe, La with or without Pt; or Pd-zeolite) in bottom layer (Table 2). That increase was reached even if the top layer contained only PGMs, Al oxide and possibly W but the adsorption capacity was calculated by the total weight of bottom and top layer. If alumina only as a support, the adsorption capacity was 9 (w/o Pt) or 19 µmol/g coating materials.

The results showed the promotion of Pt presence in Ce layer on NOₓ adsorption capacity at low temperature of 120°C. In situ NO₂ formation on Pt sites as a low concentration near to Ce adsorbent in bottom layer had a promoting effect. The addition of Ce1 in bottom layer with or without Pt/Pt+Pd, the adsorption capacity increases up to 37 - 58 µmol/g (2 - 5 times higher), even if only the bottom layer acted the main adsorption layer.

The use of Zr stabilized Ce oxide (ZrCe) resulted in 33 - 50 in µmol NOₓ/g and Pd-ferrierite in 19 µmol NOₓ/g. Pt only versions are aimed for the outlet partition and Pt+Pd versions for the inlet partition. The adsorption capacity could be maximized by using NOₓ adsorbent only as a coating, but the purpose of the disclosure was to optimize the catalyst article (1) for oxidation reactions in normal use or in DPF regeneration as well as for passive NOₓ adsorption-desorption.

The presence of all components (PGM, NOₓ adsorbents, W) in the same layer will cause negative effects like lower thermal/sulfur durability, lower Pt stabilization, lower NOₓ adsorption capacity due to component interactions and undesired mass transfer limitations.

The results are applicable for typical lean applications like with exhaust gases with diesel, NG or/and hydrogen fuel combustion. These compositions are operating a kind of passive NOₓ adsorbents, releasing NOₓ during a temperature increase up to about 180 - 250°C.

**Table 2: NOₓ adsorption capacity and desorption at 120 - 200°C with single two-layer catalysts by temperature programmed desorption experiments in the range of 120 - 500°C.**

| Example | Code | Total NOₓ adsorption. | Desorbed at 120-200°C µmol NOx /g_{coating} | Desorbed at 120-200°C % of total capacity |
|---|---|---|---|---|
| | | Capacity (120-500°C) µmol NOₓ /g_{coating} | | |
| 11a | Pt-Al-W / Pt-Ce1 | 47 | 20 | 43 |
| 11b | Pt-Pd-Al / Pt-Ce1 | 58 | 24 | 41 |
| 11c | Pt-Al-W / Ce1 | 37 | 14 | 37 |
| 11d | Pt-Al-W / Pt-ZrCe-La | 50 | 16 | 33 |
| 11e | Pt-Al-W / Pt-ZrCe | 33 | 12 | 37 |
| 11f | Pt-Pd-Al / Pd-Fer | 19 | 7 | 36 |
| 11i | Pt-Al-W / Pt-Ce2 | 109 | 65 | 59 |
| 11h | Pt-Pd-Al / Pt-Ce2 | 88 | 49 | 49 |
| 11g | Pt-Al-W / Pt-Al REF | 19 | 2 | 11 |
| 11j | Pt-Al-W / Al REF | 9 | 3 | 33 |

Based on desorption results at 120 - 500°C, even porous alumina, typical in conventional DOCs, had also a low adsorption capacity but NOₓ was more tightly bound on surface (Table 2, Figure 16). NOₓ desorption on alumina was low below 200°C (11% desorbed), which is not appropriate for the applications having deNOₓ unit (urea-SCR or LNT) downstream. Oppositely, cerium (Ce1), lanthanum and Pd-Fer containing catalysts released 36 - 43% of adsorbed NOₓ up to 200°C.

Even if Pd-Fer containing sample had a lower NOₓ adsorption capacity, near to alumina-based catalysts, the release of NOₓ was high (36%) up to 200°C. A catalyst composing of ZrCe+La, had quite good release but La nitrates are more stable than nitrates on cerium oxides, resulting intermediate adsorption strengths and NOₓ desorption at higher temperatures.

La and Ce oxides have more strongly bound nitrates (NOₓ) than alumina at 270 - 380°C but due to three times higher capacity the buffer effect to prevent NOₓ emissions was much higher than on alumina. La is a good in the combination of cerium materials, when buffering of NOₓ emissions is required at higher temperatures. High surface area (> 200 m²/g) Ce2 as NOₓ adsorbent increased the NOₓ adsorption capacity significantly, up to 88 - 108 µmol/g.

In addition, the release of NOₓ was also very high with samples 11h and 11i below 200°C, up to 49 - 59%. The main part (> 50%) of desorbed NOₓ in the range of 120 - 200°C was also NO₂, which will have a promoting effect on NH₃-SCR, HC-SCR and HC oxidation reactions at these low temperatures. It is even possible to form NO₂ into exhaust flow at lower temperatures than on Pt-rich top layer or conventional DOCs by desorption from NOₓ adsorbents. This is a benefit from NOₓ adsorption-desorption in the catalyst article (1). These properties of adsorbing passively NOₓ in lean conditions and oxidizing HC, CO and NO emissions efficiently results in an integrated solution having desired properties in a layered catalyst article (1).

This kind of a catalyst article (1) can assist in SCR catalysts, particularly in cold driving conditions, e.g., in World Harmonized Transient Cycle (WHTC) in cold-start conditions, where temperatures are mainly below 200°C for the first 400s. The NOₓ adsorption-desorption utilization can be evaluated by an example with a 4.4 L diesel engine, where total raw NOₓ emissions were about 50 grams in that cycle (4.7 g/kWh). NOₓ adsorption-desorption is utilized in the total system, where an efficient SCR catalyst (e.g., Cu-zeolite based) locates after the catalyst article (1) and desorbed NOₓ is reduced at SCR operation temperatures.

When using as an example a catalyst article (1) with a volume of 3.4 dm³, the coating amount of 140 g/L and total adsorption capacity of about 100 µmol NOₓ/g coating (by examples 11h and 11i), the total adsorption capacity will be about 2.2 g NO₂ (at 120°C).

Therefore, it can be roughly estimated to have a potential to remove about by 1-3 grams of NO₂ during the first 500 s, when temperature cycles in the range of 50 - 250°C and NOₓ adsorption capacity can be applied 1-3 times in adsorption-desorption cycles. This NOₓ removal potential of the catalyst article (1) is significant, when assisting SCR systems are in cold phases below 180°C, where urea/NH₃-SCR is not yet activated.

In cold WHTC, where NOₓ conversions over the cycle will remain often below 90%, a catalyst article (1) gives an opportunity to increase NOₓ conversion efficiency by 2-6%, which gives an essential improvement for total NOₓ removal efficiency.

### Test Results on Table 3

The activity of catalyst article (1) by examples 12a-d was investigated in NOₓ adsorption-desorption experiments in synthetic gas bench (SGB) as fresh. The results of these experiments with 4-layer catalyst article (1)s can be seen in Table 3. Ce2 is a high surface area CeOₓ compound with a small particle size and high NOₓ adsorption capacity. The highest NOₓ adsorption capacity was reached when both inlet and outlet layers contained Ce2 (example 12a). The released NOₓ amount was also high in the temperature range of 120 - 200°C. The use of Pd-Fer as a bottom layer with Pt+Pd+Al as a top layer in the inlet part (example 12c) also showed a high NOₓ adsorption capacity. A reference (example 12d) without NOₓ adsorption compounds showed clearly lower NOₓ adsorption capacity and relative lower NOₓ release at 120 - 200°C. The combinatory promotion was reached when using four layers in the catalyst article (1).

The absolute NOₓ desorption at 120 - 200°C with catalyst article (1)s of the present disclosure was 5 - 8 times higher than with the alumina-based reference. Pd-zeolite has a lower NOₓ adsorption capacity than cerium compounds or other NOₓ adsorbents but a better NOₓ release ability at low temperatures. In addition to NOₓ adsorption, Pd-zeolite has also a role in HC trapping and oxidation to decrease HC emissions in normal drive at low temperatures (< 200°C) or during DPF regeneration.

When NOₓ adsorption capacity was calculated in this example for total coating amount, including layers without NOₓ adsorption materials, the NOₓ adsorption capacity in NOₓ adsorbent layers can be evaluated to be about 100 - 150 µmol/g with Ce2. Therefore, it is possible to adjust NOₓ adsorption capacity by the coating amount of the layers including NOₓ adsorbents. If the NOₓ adsorption capacity is needed at very low temperatures around 100 - 120°C, it is possible to use relatively higher PGM loadings in top or bottom layers, to promote more NO to NO₂ reaction on catalyst surface.

**Table 3: NOₓ adsorption capacity and desorption at 120 - 200°C with 4-layer catalysts by temperature programmed desorption experiments in the range of 120 - 500°C.**

| Example | Code | Total NOₓ adsorption capacity µmol NOₓ /g_{coating} | Desorbed at 120-200°C, µmol NOₓ /g_{coating} | Desorbed at 120-200°C, % of total capacity |
|---|---|---|---|---|
| 12a | Pt-Pd-Al / Pt-Ce2 // Pt-Al-W / Pt-Ce2 (1:1) | 75 | 41 | 54 |
| 12b | Pt-Pd-Al / Pt-Ce2 // Pt-Al-W / Al (1:1) | 50 | 25 | 49 |
| 12c | Pt-Pd-Al / Pd-Fer // Pt-Al-W / Pt-Ce2 (1:1) | 41 | 26 | 64 |
| 12d | Pt-Pd-Al / Al // Pt-Al-W / Al (1:1) REF | 18 | 5 | 27 |

### Test Results in Figure 17

Correspondingly to previous test diagram, the activity of same catalyst article (1)s by examples 12a, 12b and 12d were investigated in light-off experiments in synthetic gas bench (SGB) as fresh. The effect of these combinations on NO₂ formation are presented in Figure 17.

Following this embodiment, all samples containing NOₓ adsorption materials different locations NOₓ adsorption materials were able to reach same the NO oxidation to NO₂ activity. Besides these tests the examples 12a, 12b and 12d were studied as HT700 aged under regeneration conditions, where it was seen that the THC light-off temperatures of these examples were minor (within 5°C). The results confirm that Ce compounds in bottom layers have minor impact on NO₂ formation and THC conversions on catalyst article (1)s.

The best mode according to the present disclosure is given by the examples in which inlet/outlet of the catalyst article (1) is given by examples 12a-c. In these combinations the following features are used:
- layered structure with optimized PGM utilization and coating compositions;
- tungsten in outlet distal layer to promote NO₂ formation and to increase stability against sulfur poisoning;
- NOₓ adsorption-desorption properties in bottom layer to enhance DeNOₓ function in cold-start;
- NOₓ adsorption- desorption properties in inlet and outlet bottom (proximal) coating layers to reach high NOₓ adsorption and desorption to promote overall NOₓ removal in deNOₓ units in cold start while a high NO₂ formation and efficient HC oxidation during DPF regeneration conditions is still ensured.

The main inventive step is the combination of high NOₓ adsorption-desorption AND high NO₂ formation with high thermal durability and sulfur resistance by combination of the layered structure design with the tungsten dotation in the outlet top layer and the NSC materials in the bottom layer. These examples were combined to PGM loading and Pt:Pd ratio optimization in coating layers to reach also a high efficiency in DPF active regeneration with high HC concentrations.

### CLOSING COMMENTS

Although the present invention has been described in detail for purpose of illustration, it is understood that such detail is solely for that purpose, and variations can be made therein by those skilled in the art in practicing the claimed subject matter, from a study of the drawings, the disclosure, and the appended claims.

The term "comprising" as used in the claims does not exclude other elements or steps. The indefinite article "a" or "an" as used in the claims does not exclude a plurality. A single processor or other unit may fulfill the functions of several means recited in the claims. A reference sign used in a claim shall not be construed as limiting the scope.

## Claims

1. A catalyst article (1) for exhaust gas purification in lean exhaust gas conditions comprising a passage (3) for permitting an exhaust gas to traverse said catalyst article (1), thereby defining an inlet and an outlet from said passage for said exhaust gas and a flow direction of passage for said exhaust gas traversing said catalyst article (1), said passage (3) presenting a substrate (2) surface for carrying one or more catalytically active layers (11,12,21,22) for converting at least a respective first and a respective second undesired chemical component contained in said exhaust gas into at least a corresponding first or a corresponding second desired chemical component during passage of said catalyst article (1) by said exhaust gas;
- where on said substrate (2) are arranged at least a first and a second catalytic partition (10,20), each respective catalytic partition (10,20) comprising at least a respective first and a respective second catalytic layer (11,12), (21,22) arranged such that a said first respective catalytic layer (11,21) is proximal to said substrate (2) and a said second respective catalytic layer (12,22) is distal from said substrate (2) ;
- where each of said first and second catalytic layers (11,12,21,22) are pairwise chemically distinct;
- where said first catalytic partition (10) is arranged in said passage (3) such that said exhaust gas while traversing said passage (3) first encounters said first catalytic partition (10) prior to encountering said second catalytic partition (20); and
- where said second catalytic partition (20) promotes a catalytic conversion of one of either said respective first or second undesired chemical components into a said corresponding first or second desired chemical component and said first catalytic partition (10) substantially does not; and
- wherein said first catalytic partition (10) is selective for the conversion of hydrocarbons, H₂, and/or carbon monoxide (CO) from exhaust gas into water and carbon dioxide; and said second catalytic partition (20) is selective for the conversion of nitrogen monoxide into nitrogen dioxide, and/or for the conversion of sulfur dioxide into sulfur trioxide.

2. A catalyst article (1) according to claim 1, wherein said first catalytic partition (10) comprises in said first proximal catalytic layer (11) one or more catalytically active metals selected from platinum-group metals (PGM) comprising Pt, Pd, Rh, Ir, Ru, Os, at a metal loading of less than 0.8 g/L; and in said first distal catalytic layer (12) comprises one or more catalytically active metals selected from platinum-group metals (PGM) comprising Pt, Pd, Rh, Ir, Ru, Os, at a metal loading of between 0.5 - 7.0 g/L, with the proviso that metal loading in said first distal catalytic layer (12) shall be higher than in said first proximal catalytic layer (11).

3. A catalyst article (1) according to claim 2, wherein said platinum-group metal selected for said first proximal (11) and distal (12) catalytic layers are platinum and/or palladium.

4. A catalyst article (1) according to claim 3, wherein platinum and palladium are present in said first distal catalytic layer (12) at a Pt:Pd ratio in the range from 1:4 to 5:1 and in said first proximal catalytic layer (11) at a Pt:Pd ratio in the range from 1:9 to 9:1.

5. A catalyst article (1) according to claim 2, wherein said second catalytic partition (20) in said second proximal catalytic layer (21) comprises one or more catalytically active metals selected from platinum-group metals (PGM) comprising Pt, Pd, Rh, Ir, Ru, Os, at a metal loading of less than 0.8 g/L, and in said second distal catalytic layer (22) comprises one or more catalytically active metals selected from platinum-group metals (PGM) comprising Pt, Pd, Rh, Ir, Ru, Os, at a metal loading of between 0.1 - 2.0 g/L, with the proviso that metal loading in said second distal catalytic layer (22) shall be higher than in said second proximal catalytic layer (21), and wherein said second distal catalytic layer (22) further comprises tungsten (W) and/or molybdenum (Mo) in an amount sufficient for promoting conversion of NOx to nitrogen dioxide.

6. A catalyst article (1) according to claim 5, wherein said platinum-group metal selected for said second proximal (21) and distal (22) catalytic layers are platinum and/or palladium.

7. A catalyst article (1) according to claim 6, wherein the Pt:Pd ratio in said second distal catalytic layer (22) is in the range from 1:0 to 30:1 and in said second proximal catalytic layer (21) the range from 1:9 to 9:1.

8. A catalyst article (1) according to any of the claims 5 to 7, wherein tungsten (W) is present as tungsten oxide (WO₃) is in the range from 1 to 30 g/L in said second distal catalytic layer (22).

9. A catalyst article (1) according to any of the claims 2 to 8, wherein the PGM loading in said catalytic layers (11,12,21,22) follow the order: In-T ≥ Out-T > In-B > Out-B, but preferably In-T > Out-T > In-B > Out-B.

10. A catalyst article (1) according to any of the claims 2 to 9, wherein said first (11) and second (21) proximal catalytic layers further comprise cerium (Ce) oxides or cerium mixed oxides selected from ZrCe, MnCe, TiCe, PrCe oxides, or their combinations, in amounts sufficient for promoting NOₓ adsorption-desorption and NO₂ formation by desorption below 200°C.

11. A catalyst article (1) according to claim 10, wherein cerium in the form of a cerium oxide or a cerium mixed oxide is present in an amount of from 0.05 g/L to 0.5 g/L based on total cerium oxide or cerium mixed oxide weight.

12. A catalyst article (1) according to any of the claims 2 to 11 wherein said first (11) and second (21) proximal catalytic layers further comprise lanthanum (La), yttrium (Y), hafnium (Hf), or a combination thereof, but preferably lanthanum, in an amount in the range from 1 to 10 g/L as stable oxides, preferably from 3 to 6 g/L for promoting the NOₓ and SOₓ adsorption capacity of said first and second proximal catalytic layers.

13. A catalyst article (1) according to any of the claims 2 to 12, wherein said first (11) and second (21) proximal catalytic layers further comprise one or more zeolites having a high Si/Al₂ ratio (SAR) selected from Beta, ZSM-5, chabazite (CHA), AEI, ferrierite (Fer), Y or their combinations in an amount from 5 - 1000 g/L, but preferably 10 - 50 g/L for increasing hydrocarbon and/or NOₓ adsorption capacity.

14. A catalyst article (1) according to any of the claims 2 to 13, wherein said catalytic layers (11,12,21,22) further to said catalytic promoters comprise a porous support selected from porous metal oxides comprising aluminum oxide, alumina (Al₂O₃), silicon oxide (SiOₓ), silica (SiO₂), titanium oxide (TiOₓ), titania (TiO₂), or mixtures thereof.

15. A catalyst article (1) according to claim 15, wherein the amount of coating in each coating layer is from 10 to 200 g/L, preferably from 40 to 100 g/L, and more preferably from 50 to 80 g/L in all layers of said catalyst article (1), and wherein said porous metal oxide form the balance for the coating composition.
